**Europäisches Patentamt**

**European Patent Office**

**Office européen des brevets**

(11) Numéro de publication: **0 182 710**
**B1**

(12)

# FASCICULE DE BREVET EUROPEEN

(45) Date de publication du fascicule du brevet:
**11.05.88**

(51) Int. Cl.⁴: **F 16 F 15/12, F 16 H 41/24**

(21) Numéro de dépôt: **85402205.0**

(22) Date de dépôt: **14.11.85**

(54) **Dispositif amortisseur de torsion à grand débattement angulaire, et organe d'accouplement hydraulique comportant un tel dispositif amortisseur de tosion, notamment pour véhicule automobile.**

(30) Priorité: **16.11.84 FR 8417493**

(43) Date de publication de la demande:
**28.05.86 Bulletin 86/22**

(45) Mention de la délivrance du brevet:
**11.05.88 Bulletin 88/19**

(84) Etats contractants désignés:
**DE FR GB IT**

(56) Documents cités:
**FR - A - 2 282 578**
**FR - A - 2 526 907**

(73) Titulaire: **VALEO, 64 Avenue de la Grande Armée,
F-75017 Paris (FR)**

(72) Inventeur: **Billet, René, Allée des Cerfs Résidence
Beaularris, F-60620 Lamorlaye (FR)**
Inventeur: **Moussion, Roland, 67 Rue Victor Hugo,
F-91120 Palaiseau (FR)**
Inventeur: **Blonaz, Jean, 84 Avenue Stalingrad,
F-94120 Fontenay-sous-Bois (FR)**

(74) Mandataire: **CABINET BONNET-THIRION, 95 Boulevard
Beaumarchais, F-75003 Paris (FR)**

## Description

La présente invention concerne d'une manière générale les dispositifs amortisseurs de torsion du genre comportant au moins deux parties coaxiales montées rotatives l'une par rapport à l'autre, dans les limites d'un débattement angulaire déterminé, et à l'encontre de moyens élastiques, dits moyens élastiques à action circonférentielle, aptes à agir circonférentiellement entre elles pour une plage au moins d'un tel débattement angulaire.

Ainsi qu'on le sait, sur un véhicule automobile, un tel dispositif amortisseur de torsion est usuellement inséré sur la chaîne cinématique qui va du moteur aux arbres de roue, pour filtrer les vibrations susceptibles de prendre naissance tout au long de cette chaîne cinématique, et, ainsi, assurer une transmission régulée d'un couple de rotation le long de celle-ci.

La présente invention vise plus particulièrement le cas où, pour l'obtention d'un débattement relativement grand entre les parties coaxiales concernées pour les valeurs relativement faibles de couple, une première desdites parties comporte, d'une part, un moyeu, et, d'autre part, deux flasques, dits ici par simple commodité voile de moyeu et contre-voile de moyeu, qui forment chacun une pièce annulaire autour dudit moyeu, et dont chacun engrène avec ledit moyeu par des moyens d'engrènement à jeu, avec, pour la configuration de repos de l'ensemble, une disposition alternée suivant laquelle les moyens d'engrènement à jeu entre le moyeu et le voile de moyeu sont en butée circonférentielle pour un sens circonférentiel, et, conjointement, les moyens d'engrènement à jeu entre ledit moyeu et le contre-voile de moyeu sont en butée circonférentielle pour le sens circonférentiel opposé au précédent, tandis qu'une deuxième partie comporte elle-même au moins un flasque, communément dit rondelle de guidage, qui forme lui aussi une pièce annulaire autour du moyeu, mais qui est libre en rotation par rapport à celui-ci, tant dans un sens circonférentiel que dans le sens circonférentiel opposé.

Un tel dispositif amortisseur de torsion se trouve notamment décrit dans le document EP-A-172 100 publié le 19.2.1986.

Plus particulièrement encore, mais non nécessairement exclusivement, la présente invention vise le cas où un tel dispositif amortisseur de torsion doit équiper un organe d'accouplement hydraulique, qu'il s'agisse d'un convertisseur de couple ou d'un coupleur.

Un tel organe d'accouplement hydraulique comporte, alors, globalement, une roue d'impulseur et un couvercle, qui, comportant lui-même une paroi globalement cylindrique et une paroi globalement transversale, est solidaire de la roue d'impulseur et forme avec la paroi extérieure de celle-ci un carter dans lequel se trouvent en particulier disposés, en regard de la roue d'impulseur, une roue de turbine, et dans le volume interne de sa paroi cylindrique, entre sa paroi transversale et ladite roue de turbine, un dispositif amortisseur de torsion.

L'un des problèmes à résoudre, dans la réalisation des organes d'accouplement hydrauliques comportant ainsi de manière intégrée un dispositif amortisseur de torsion, résulte notamment de ce que la place disponible pour l'implantation de ce dernier est particulièrement réduite, notamment axialement.

Elle se limite en effet à un certain volume demeurant éventuellement libre entre la paroi transversale du couvercle et la roue de turbine.

Si, périphériquement, ce volume va en s'épanouissant à la faveur du coude que forment entre elles les parois transversale et cylindrique du couvercle et de la courbure des aubes de la roue de turbine à leur périphérie, il n'en est pas de même, axialement, au voisinage du pied de ces aubes, et, surtout, il n'en est pas de même au droit de leur zone médiane, le renflement que forment à celle-ci lesdites aubes empiétant largement sur un tel volume.

Traditionnellement, et c'est le cas notamment pour celui faisant l'objet du document EP-A-172 100 mentionné ci-dessus, les dispositifs amortisseurs de torsion s'inscrivent globalement dans un quadrilatère, en présentant, axialement, tant au droit de leur partie centrale qu'au droit de leur partie médiane, des dimensions comparables à celle qui est la leur à leur périphérie, là où une telle dimension est en pratique conditionnée par les présence des moyens élastiques à action circonférentielle à mettre en oeuvre.

La raison en est notamment que les divers flasques participant à la constitution d'un tel dispositif amortisseur de torsion sont usuellement globalement parallèles les uns aux autres en chacun de leurs points.

C'est ainsi, par exemple, que, dans le document EP-A-172 100 mentionné ci-dessus, le voile de moyeu et le contre-voile de moyeu s'étendent l'un et l'autre en totalité dans des plans transversaux différents, en sorte que leurs moyens d'engrènement à jeu avec le moyeu interviennent eux aussi dans des plans transversaux différents, dont la distance axiale vient au détriment de l'encombrement axial de l'ensemble au droit de tels moyens d'engrènement.

Il est naturellement possible de s'en satisfaire, lorsque aucun problème particulier d'encombrement ne se pose.

Ce n'est pas le cas, comme souligné ci-dessus, lorsque le dispositif amortisseur de torsion doit équiper un organe d'accouplement hydraulique.

La présente invention a d'une manière générale pour objet une disposition permettant de surmonter dans un tel cas cette difficulté, et conduisant en outre à d'autres avantages.

De manière plus précise, elle a tout d'abord pour objet un dispositif amortisseur de torsion, notamment pour véhicule automobile, du genre comportant au moins deux parties coaxiales montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir une première partie comportant, d'une part, un moyeu, et, d'autre part, deux flasques, dits ici par simple commodité voile de moyeu et contre-voile de moyeu, qui forment chacun une pièce annulaire autour dudit moyeu, et dont chacun engrène avec ledit moyeu par des moyens d'engrènement à jeu, avec, pour la configuration de

repos de l'ensemble, une disposition alternée suivant laquelle les moyens d'engrènement à jeu entre le moyeu et le voile de moyeu sont en butée circonférentielle pour un sens circonférentiel, et, conjointement, les moyens d'engrènement à jeu entre ledit moyeu et le contre-voile de moyeu sont en butée circonférentielle pour le sens circonférentiel opposé au précédent, et une deuxième partie comportant elle-même au moins un flasque, communément dit rondelle de guidage, qui forme lui aussi une pièce annulaire autour du moyeu, mais qui est libre en rotation par rapport à celui-ci, tant dans un sens circonférentiel que dans le sens circonférentiel opposé, ce dispositif amortisseur de torsion étant d'une manière générale caractérisé en ce que, entre les périphéries interne et externe du voile de moyeu et du contre-voile de moyeu, il y a au moins une zone dudit voile de moyeu et dudit contre-voile de moyeu, dite ci-après par simple commodité zone d'interpénétration, où ce voile de moyeu et ce contre-voile de moyeu s'interpénètrent axialement l'un par rapport à l'autre; elle a encore pour objet un organe d'accouplement hydraulique équipé d'un tel dispositif amortisseur de torsion.

Par exemple, suivant une première disposition, les zones d'action suivant lesquelles interviennent les moyens d'engrènement à jeu entre le moyeu et le voile de moyeu et ceux entre le moyeu et le contre-voile de moyeu appartiennent à une telle zone d'interpénétration, lesdites zones d'action étant au moins en partie circonférentiellement sensiblement dans l'alignement l'une de l'autre.

Par zones d'action circonférentiellement sensiblement dans l'alignement l'une de l'autre, on entend ici des zones d'action qui, nonobstant leur propre extension axiale et des configurations plus ou moins tourmentées pour les pièces en cause, sont sensiblement dans un même plan transversal.

En pratique, le moyeu comportant lui-même, transversalement, pour la constitution des moyens d'engrènement à jeu, un flasque, dit ici par simple commodité voile intermédiaire, les zones d'action desdits moyens d'engrènement à jeu peuvent l'une et l'autre être au moins partiellement confinées dans l'épaisseur même dudit voile intermédiaire si désiré.

Lorsque, par exemple, suivant une forme particulière de réalisation, les moyens d'engrènement à jeu comportent, tant pour le voile de moyeu et le contre-voile de moyeu que pour le voile intermédiaire, des dents, les dents de l'un au moins des flasques que constituent ce voile de moyeu et ce contre-voile de moyeu sont, pour ce faire, c'est-à-dire pour les ramener dans le plan du voile intermédiaire, au moins partiellement déportées axialement en direction de l'autre par rapport à la partie courante d'un tel flasque, et il en est en pratique ainsi pour l'un et l'autre de ces flasques.

En variante de la disposition précédente, ou conjointement avec celle-ci, le voile de moyeu et le contre-voile de moyeu peuvent comporter, radialement à distance de leur périphérie interne, une zone d'interpénétration.

Par exemple, le long de cette zone d'interpénétration, ou zone d'interpénétration intermédiaire, l'un au moins des flasques que constituent ce voile de moyeu et ce contre-voile de moyeu comporte au moins un évidement, une fenêtre par exemple, et l'autre comporte une portion, dite ici par simple commodité portion d'engagement, engagée axialement dans ledit évidement.

Quoi qu'il en soit, grâce à la disposition suivant l'invention, il y a avantageusement, au droit d'une zone d'interpénétration, une minimisation de l'encombrement axial nécessaire à l'implantation des pièces en jeu.

En pratique, dans le cas de l'équipement d'un organe d'accouplement hydraulique, une telle zone d'interpénétration est préférentiellement prévue au droit du renflement de la roue de turbine, c'est-à-dire au droit de la zone médiane des aubes de celle-ci, là où le volume disponible est le plus étroit.

Par exemple, dans le cas où les moyens d'engrènement à jeu entre le moyeu et le voile de moyeu et ceux entre le moyeu et le contre-voile de moyeu mettent en oeuvre un voile intermédiaire, ces moyens d'engrènement à jeu peuvent s'étendre radialement au-delà du renflement de la roue de turbine par rapport à l'axe de l'ensemble, au voisinage dudit renflement, et ledit voile intermédiaire est alors la seule épaisseur de matière à loger au droit de celui-ci.

En variante, les moyens d'engrènement à jeu en question peuvent s'étendre entre l'axe de l'ensemble et le renflement de la roue de turbine, et, au droit dudit renflement, il est alors établi une zone d'interpénétration à évidement(s) et portion(s) d'engagement.

Dans un tel cas, le voile de moyeu et le contre-voile de moyeu ont radialement une extension avantageusement relativement notable, et, compte tenu du bras de levier dont ils bénéficient ainsi au niveau de leurs dents, ils présentent avantageusement à ce niveau une capacité de déformation axiale non négligeable, favorable à leur tenue mécanique en service.

Dans tous les cas, il y a ainsi avantageusement, grâce à la disposition suivant l'invention, une parfaite adaptation au volume disponible au dispositif amortisseur de torsion à mettre en oeuvre, seul intervenant, au droit du renflement de la roue de turbine, là où le volume disponible est le plus étroit, un constituant unique de ce dispositif amortisseur de torsion ou des constituants de celui-ci imbriqués axialement l'un à l'autre par une zone d'interpénétration, tandis que, à la périphérie, de part et d'autre du renflement de la roue de turbine, là où le volume disponible s'épanouit, peuvent aisément être logés les autres constituants nécessaires, et, notamment, à la périphérie de plus grand diamètre de l'ensemble, les moyens élastiques à action circonférentielle à mettre en oeuvre.

En outre, grâce à la disposition suivant l'invention, c'est-à-dire grâce à la présence d'au moins une zone d'interpénétration entre le voile de moyeu et le contre-voile de moyeu, et suivant une caractéristique de l'invention, lors du débattement angulaire, il y a, au niveau d'une telle zone d'interpénétration, un entraînement circonférentiel d'un des flasques que constituent ce voile de moyeu et ce contre-voile de moyeu par l'autre, le contre-voile de moyeu étant entraîné par le voile de moyeu pour un premier sens circonférentiel, et le voile de moyeu étant entraîné par le contre-voile de moyeu pour le sens circonférentiel opposé.

Par exemple, lorsque les moyens d'engrènement à jeu entre le moyeu et le voile de moyeu et ceux entre le moyeu et le contre-voile de moyeu appartiennent à une telle zone d'interpénétration, l'entraînement circonférentiel d'un des flasques que constituent ce voile de moyeu et ce contre-voile de moyeu par l'autre peut se faire à la faveur de cette zone d'interpénétration, par les dents correspondantes de ces flasques.

Par suite, et suivant une caractéristique complémentaire de l'invention, si, pour leur contact avec les dents du voile intermédiaire du moyeu, les dents du voile de moyeu et du contre-voile de moyeu peuvent avoir des flancs obliques, complémentaires de ceux des dents dudit voile intermédiaire, pour leur contact entre elles, les dents du voile de moyeu et du contre-voile de moyeu ont alors des flancs droits, lesdits flancs s'étendant radialement.

En variante, lorsque, entre les flasques que constituent le voile de moyeu et le contre-voile de moyeu est prévue une zone d'interpénétration intermédiaire à évidement(s) et portion(s) d'engagement engagée(s) dans de tel(s) évidement(s), l'entraînement circonférentiel d'un de ces flasques par l'autre se fait avantageusement à la faveur de cette zone d'interpénétration intermédiaire, ce qui permet de ménager leurs dents.

Dans tous les cas, tout ou partie des portions telles que dents, bords d'évidement, ou portions d'engagement, de ces flasques et/ou du voile intermédiaire du moyeu, par lesquelles ces pièces sont ainsi destinées à venir circonférentiellement en appui les unes avec les autres, sont de préférence, suivant des configurations qui peuvent être très diverses, plus ou moins ondulées, pour leur donner axialement de l'épaisseur, et, ainsi, d'une part, améliorer la portée de leur zone d'action, et, donc les ménager, et, d'autre part, minimiser les risques que, en réponse aux sollicitations dont elles sont l'objet, notamment sous les effets de la pression interne, qui conduit à un «gonflement axial du couvercle», et, par là, à un déplacement axial de telle ou telle des pièces en cause, elles viennent à échaper les unes aux autres par ripage.

Ainsi lesdites portions présentent, en pratique, radialement, c'est-à-dire dans un plan radial de l'ensemble, au moins un coude de pliage.

Enfin, suivant une autre caractéristique de l'invention, les moyens élastiques à action circonférentielle comportant deux étages d'organes élastiques de raideurs différents, avec, pour action sur ceux-ci, des bras prévus à cet effet à la périphérie externe du voile de moyeu et du contre-voile de moyeu, certains au moins des organes élastiques d'un premier desdites étages sont associés par paires, avec, pour la configuration de repos de l'ensemble, une superposition axiale des bras correspondants dudit voile de moyeu et dudit contre-voile de moyeu entre les deux organes élastiques d'une telle paire, tandis que, pour ladite configuration de repos, certains au moins des organes élastiques d'un deuxième desdits étages sont chacun individuellement encadrés, en ciseaux, par deux bras appartenant l'un au voile de moyeu l'autre au contre-voile de moyeu.

Il résulte avantageusement d'une telle disposition une facilité d'adaptation à des conditions de fonctionnement différentes suivant les applications particulières à satisfaire.

En effet, ces conditions de fonctionnement peuvent par exemple se faire de manière totalement symétrique pour l'un et l'autre des sens circonférentiels.

Mais, en variante, elles peuvent également se faire de manière dissymétrique, soit en agissant pour ce faire sur la raideur des organes élastiques en cause, soit en supprimant un ou plusieurs des bras de l'un des flasques que constituent le voile de moyeu et le contre-voile de moyeu, ce qui rend inactif, pour le sens circonférentiel considéré, et pour lui seulement, le ou les organes élastiques normalement intéressés par ce ou ces bras, soit, encore, en associant à plusieurs de tels organes élastiques.

Dans tous les cas il peut aisément être obtenu comme recherche un débattement angulaire relativement important pour les faibles valeurs de couple, seuls intervenant alors les organes élastiques d'un premier étage choisis pour être de raideur relativement faible.

Et, conjointement, il peut aisément être obtenu une butée élastique importante pour les valeurs de couple fortes, les organes élastiques d'un deuxième étage, choisis pour présenter une raideur relativement forte, ajoutant alors leurs effets à ceux des précédents.

Les caractéristiques et avantages de l'invention ressortiront d'ailleurs de la description qui va suivre, à titre d'exemple, en référence aux dessins schématiques annexés sur lesquels:

la figure 1 est une vue partielle en coupe transversale, suivant la ligne brisée I-I de la figure 2, d'un organe d'accouplement hydraulique équipé d'un dispositif amortisseur de torsion suivant l'invention;

la figure 2 en est, à échelle supérieure, une vue partielle en coupe axiale, suivant la ligne brisée II-II de la figure 1;

les figures 2A, 2B sont des vues qui, reprenant pour partie celle de la figure 2, mettent l'accent de manière artificielle sur tel ou tel composant du dispositif amortisseur de torsion suivant l'invention;

la figure 3 est, à l'échelle de la figure 2, une autre vue partielle en coupe axiale de l'organe d'accouplement hydraulique et du dispositif amortisseur de torsion suivant l'invention, suivant la ligne III-III de la figure 1;

la figure 4 est, à une autre échelle, une vue partielle en élévation d'un des constituants du dispositif amortisseur de torsion suivant l'invention;

les figures 5, 6 en sont des vues partielles en coupe axiale, suivant respectivement les lignes V-V et VI-VI de la figure 4;

la figure 7 est, à l'échelle de la figure 4, une vue partielle en élévation d'un autre des constituants du dispositif amortisseur de torsion suivant l'invention;

les figures 8, 9, 10 en sont des vues partielles en coupe axiale, suivant respectivement les lignes VIII-VIII, IX-IX et X-X de la figure 7;

la figure 11 est, à l'échelle de la figure 4, une vue partielle en élévation d'un autre des constituants du dispositif amortisseur de torsion suivant l'invention;

les figures 12, 13, 14 en sont des vues partielles en coupe axiale, suivant respectivement les lignes XII-XII, XIII-XIII, XIV-XIV de la figure 11;

la figure 15 est, à l'échelle de la figure 4, une vue partielle en élévation d'un autre des constituants du dispositif amortisseur de torsion suivant l'invention;

la figure 16 en est une vue partielle en plan, suivant la flèche XVI de la figure 15;

les figures 17, 18 en sont des vues partielles en coupe axiale, suivant respectivement les lignes XVII-XVII, XVIII-XVIII de la figure 15;

la figure 19 est, à l'échelle de la figure 4, une vue partielle en élévation d'un autre des constituants du dispositif amortisseur de torsion suivant l'invention;

la figure 20 en est une vue partielle en élévation, suivant la flèche XX de la figure 19;

les figures 21, 22, 23 en sont des vues partielles en coupe axiale suivant respectivement les lignes XXI-XXI, XXII-XXII, XXIII-XXIII de la figure 19;

les figures 24A, 24B, 24C sont des vues qui, correspondant à celle de la figure 1, se rapportent à diverses phases de fonctionnement du dispositif amortisseur de torsion suivant l'invention;

la figure 25 est un diagramme illustrant ce fonctionnement;

la figure 26 est une vue en coupe transversale, qui, reprenant pour partie celle de la figure 1, se rapporte à une variante de réalisation;

la figure 27 est une vue en coupe axiale, qui, reprenant pour partie celle de la figure 2, se rapporte à une autre variante de réalisation;

la figure 28 est une vue partielle en coupe axiale analogue à celle de la figure 2, pour une variante de réalisation du dispositif amortisseur de torsion suivant l'invention;

la figure 29 est, à l'échelle de la figure 28, une vue en coupe axiale partielle d'un des constituants de ce dispositif amortisseur de torsion;

la figure 30 est, de manière semblable, une vue en coupe axiale partielle d'un autre de ses constituants;

la figure 31 est, également de manière semblable, une vue partielle en coupe axiale d'un sous-ensemble unitaire que comporte ce dispositif amortisseur de torsion dans cette variante de réalisation;

la figure 32 est, à l'échelle différente, une vue partielle en élévation d'un des constituants de ce sous-ensemble;

la figure 33 en est une vue en coupe axiale, suivant la ligne brisée XXXIII-XXXIII de la figure 32;

la figure 34 est, à l'échelle de la figure 32, une vue partielle en élévation d'un autre des constituants du sous-ensemble concerné;

les figures 35, 36 sont des vues partielles en coupe axiale de ce constituant, suivant respectivement les lignes XXXV-XXXV, qui est brisée, et XXXVI-XXXVI, qui est rectiligne, de la figure 34;

la figure 37 est, à la manière de la figure 35, une vue en coupe axiale partielle d'un autre des constituants du sous-ensemble concerné;

la figure 38 est une vue partielle schématique en élévation illustrant l'imbrication relative entre eux des divers constituants représentés sur les figures 32 à 37 précédentes;

les figures 39, 40, 41 sont des vues partielles en coupe axiale illustrant, en grisé, les zones relatives d'action entre eux de ces divers constituants;

la figure 42 est une vue partielle en coupe axiale analogue à celle de la figure 2, pour une autre variante de réalisation du dispositif amortisseur de torsion suivant l'invention;

la figure 43 en est une vue partielle en coupe circonférentielle, suivant la ligne XLIII-XLIII de la figure 42;

les figures 44, 45, 46 sont des vues partielles en coupe axiale de divers constituants de ce dispositif amortisseur de torsion;

les figures 47, 48 sont elles aussi des vues en coupe axiale partielles analogues à celle de la figure 2 et concernent chacune respectivement une autre variante de réalisation du dispositif amortisseur de torsion suivant l'invention.

Ces figures illustrent, à titre d'exemple, l'application de l'invention à un organe d'accouplement hydraulique à dispositif amortisseur de torsion intégré.

Un tel organe d'accouplement hydraulique ne faisant pas partie, en soi, de la présente invention, il ne sera pas décrit dans tous ses détails ici.

Il suffira d'indiquer que, dans le volume interne d'un couvercle 10, qui est formé d'une paroi globalement cylindrique 11 et d'une paroi globalement transversale 12, et qui, par sa paroi globalement cylindrique 11, est rapporté sur la paroi extérieure d'une roue d'impulseur non visible sur les figures, il comporte, d'une part, en regard de la roue d'impulseur, une roue de turbine 13 à aubes 14, et, entre cette roue de turbine 13 et sa paroi globalement transversale 12, un dispositif amortisseur de torsion 15.

Par paroi globalement transversale, on entend ici, de manière usuelle, une paroi, qui, prise globalement, s'étend sensiblement perpendiculairement à l'axe de l'ensemble, étant entendu cependant, que, tel que représenté, elle peut présenter une configuration plus ou moins tourmentée.

En l'espèce, la paroi globalement transversale 12, qui forme un coude 16 avec la paroi globalement cylindrique 11 à laquelle elle est associée, présente successivement, de sa périphérie à l'axe de l'ensemble, deux décrochements axiaux 17, 18 en direction de la roue de turbine 13, le premier sensiblement au droit de la zone médiane 20, ou renflement, des aubes 14 de celle-ci, et le deuxième sensiblement au droit de son pied 21.

Il en résulte que le volume 22 disponible entre la roue de turbine 13 et la paroi globalement transversale 12 du couvercle 10 est, axialement, particulièrement étroit au droit de la zone médiane 20 des aubes 14 de cette roue de turbine 13, qu'il reste étroit entre ladite zone médiane 20 desdites aubes 14 et le pied 21 de ladite zone de turbine 13, et que, par contre, il s'épanouit relativement en direction de la paroi globalement cylindrique 11 du couvercle 10, à la faveur de la courbure de la zone périphérique 23 desdites aubes 14.

Dans les formes de réalisation représentées, le dispositif amortisseur de torsion 15 comporte, globalement, deux parties coaxiales A, B montées rotatives l'une par rapport à l'autre, dans les limites d'un débattement angulaire déterminé, et à l'encontre de moyens élastiques, dits moyens élastiques à action circonférentielle, aptes à agir circonférentiellement entre elles pour une plage au moins d'un tel débattement angulaire.

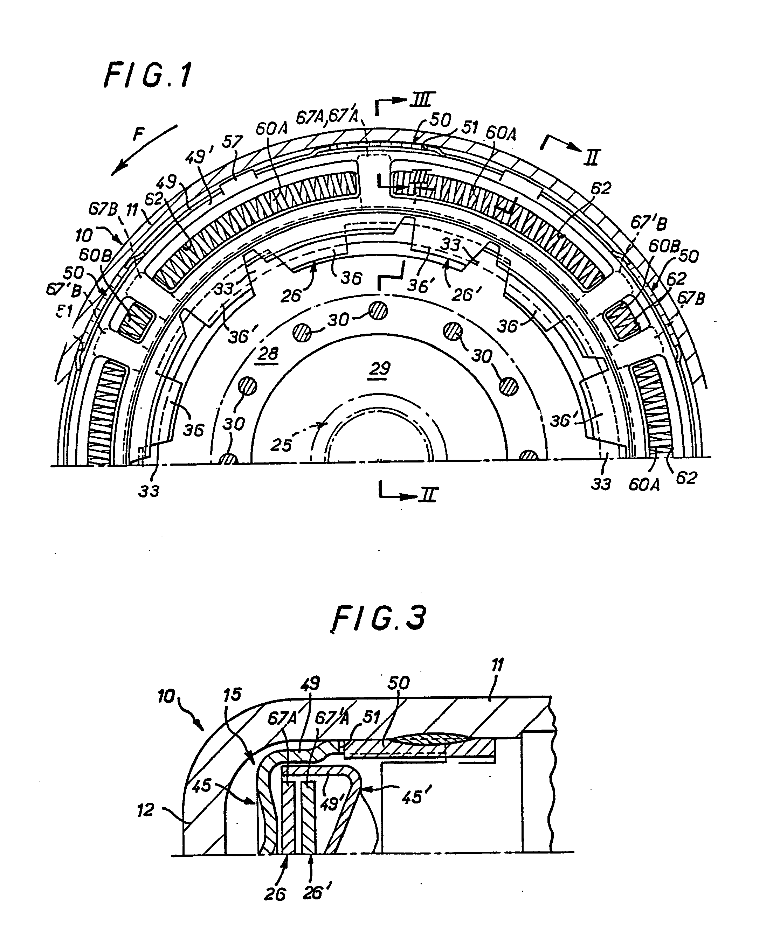

Il y a tout d'abord une première partie A, qui comporte, d'une part, un moyeu 25, figure 1, qui, si le couvercle 10 est destiné à être calé en rotation sur un premier arbre, en pratique un arbre menant, est, lui, destiné à être calé en rotation sur un deuxième arbre, en pratique un arbre mené, et, d'autre part, deux flasques 26, 26', dits ici par simple commodité voile de moyeu et contre-voile de moyeu, qui forment chacun une pièce annulaire autour du moyeu 25, en s'étendant globalement transversalement par rapport à l'axe de l'ensemble, et dont chacun engrène avec ledit moyeu 25 par des moyens d'engrènement à jeu 27, 27' détaillés ci-après.

Dans les formes de réalisation représentées, le moyeu 25 comporte lui-même, globalement transversalement par rapport à l'axe de l'ensemble, pour la constitution des moyens d'engrènement à jeu 27, 27', un flasque 28, dit ici par simple commodité voile intermédiaire.

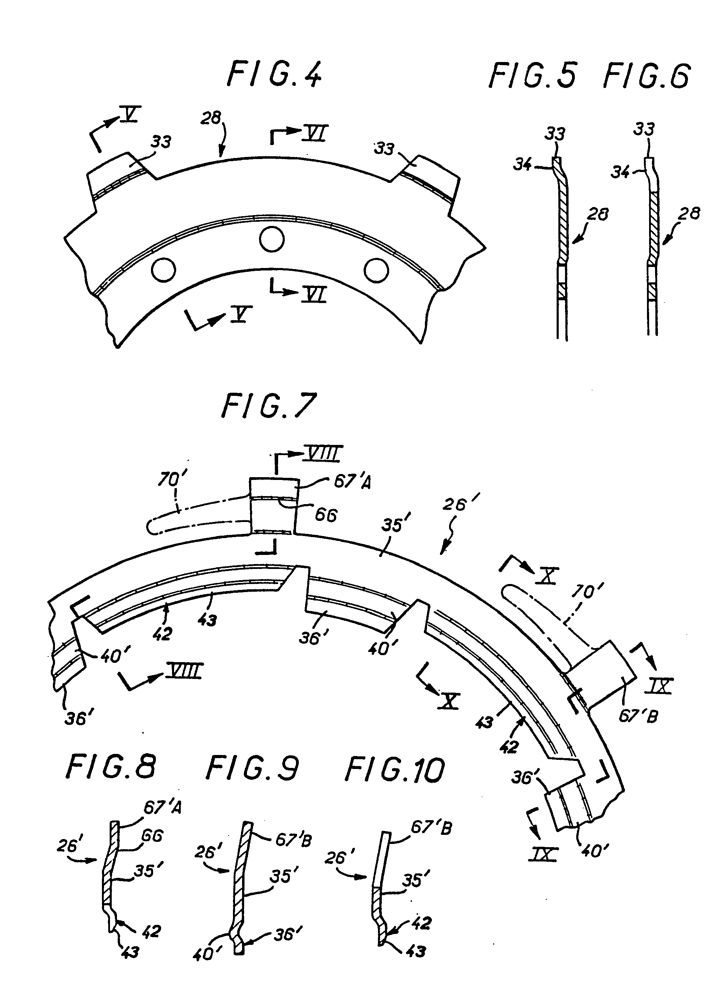

Plus précisément, dans la forme de réalisation représentée sur les figures 1 à 24, ce voile intermédiaire 28, qui est représenté isolément sur les figures 4 à 6, est rapporté sur une bride 29 que porte radialement en saillie à sa périphérie externe le moyeu 25, en étant solidarisé à cette bride 29 par des rivets 30 venus d'un seul tenant de celle-ci.

Tandis que, globalement, le voile intermédiaire 28 s'étend de manière sensiblement plane entre les décrochements 17 et 18 de la paroi transversale 12 du couvercle 10, et donc dans la zone axialement la plus étroite du volume 22 disponible entre celle-ci et la roue de turbine 13, la bride 29 présente elle-même un décrochement 31, à l'image du décrochement 18 de la paroi transversale 12 du couvercle 10.

Dans la forme de réalisation représentée, les moyens d'engrènement à jeu 27, 27' comportent, pour le voile intermédiaire 28 du moyeu 25, des dents 33, prévues radialement en saillie à cet effet à la périphérie externe de ce voile intermédiaire 28.

En pratique, ces dents 33, qui sont d'un seul tenant avec le voile intermédiaire 28 en provenant comme lui de la découpe d'un flan initialement plat, et qui sont régulièrement réparties circulairement, ont chacune un profil globalement trapézoïdal, leurs flancs latéraux étant chacun obliques sur la direction radiale de l'ensemble passant par leur zone médiane.

En pratique, également, pour tenir compte du décrochement axial 17 de la paroi transversale 12 du couvercle 10, ces dents 33 ont chacune leur extrémité déportée axialement en direction de cette paroi transversale 12, par un décrochement axial 34 affectant leur zone médiane.

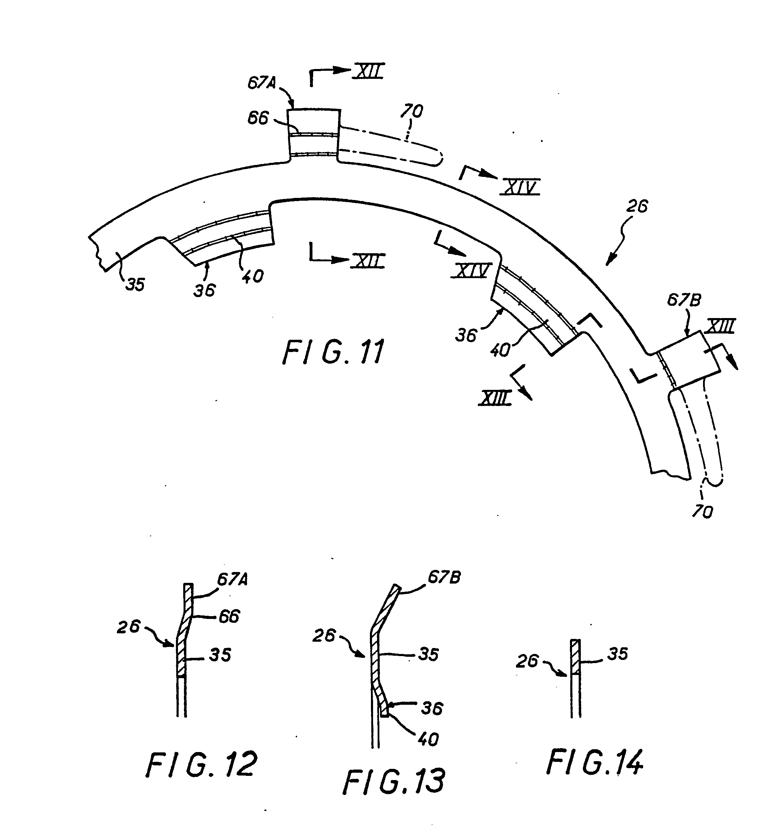

Les flasques que constituent le voile de moyeu 26 et le contre-voile de moyeu 26' sont représentés isolément, le premier sur les figures 11 à 14, et le deuxième sur les figures 7 à 10.

Ils comportent, l'un et l'autre, dans leur zone médiane, globalement perpendiculairement à l'axe de l'ensemble, une partie annulaire plane 35, 35', qui, par simple commodité, est définie ici comme étant leur partie courante, et par laquelle ils sont parallèles l'un à l'autre, en étant en pratique au contact l'un de l'autre.

Dans la forme de réalisation représentée sur les figures 1 à 24, les moyens d'engrènement à jeu 27, 27' comportent, tant pour le voile de moyeu 26 que pour le contre-voile de moyeu 26', des dents 36, 36' destinées à coopérer avec les dents 33 du voile intermédiaire 28 du moyeu 25.

Ils présentent entre eux un jeu radial réduit qui permet en fonctionnement un recentrage du voile de moyeu 26 et du contre-voile de moyeu 26' sur le voile intermédiaire 28.

En pratique, pour la constitution de ces moyens d'engrènement à jeu 27, 27', le voile de moyeu 26 et le contre-voile de moyeu 26' ont un nombre de dents 36, 36' égal à celui des dents 33 du voile intermédiaire 28 du moyeu 25.

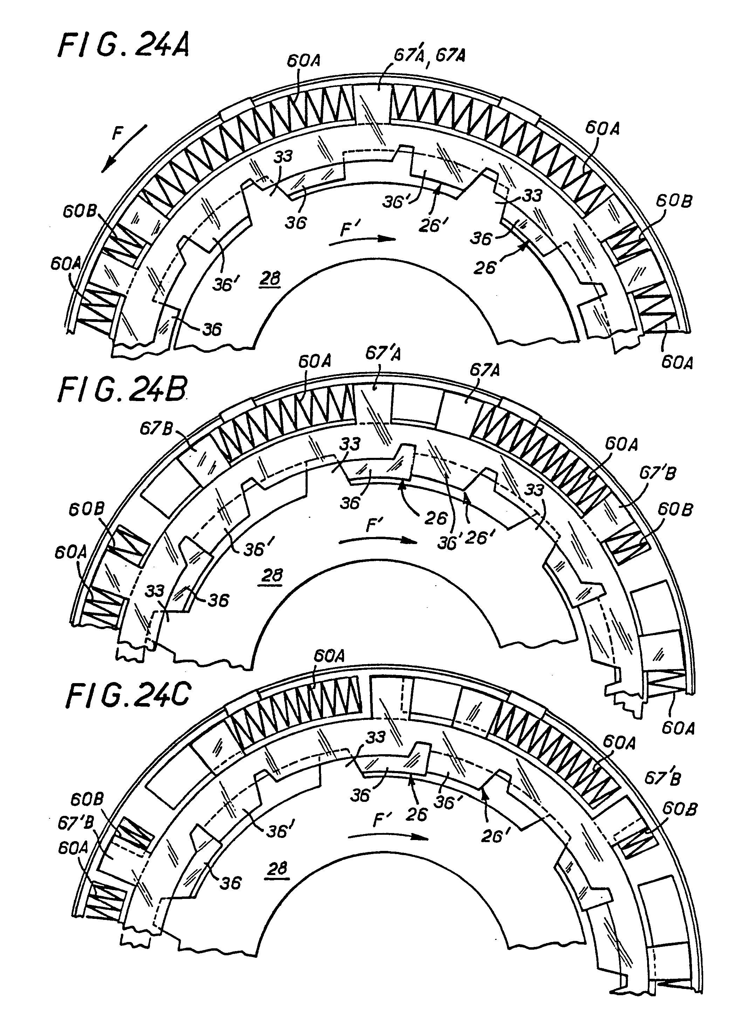

De manière connue en soi, il y a, pour la configuration de repos de l'ensemble, une disposition alternée des moyens d'engrènement à jeu 27, 27' concernés, suivant laquelle les moyens d'engrènement à jeu 27 entre le voile intermédiaire 28 du moyeu 25 et le voile de moyeu 26 sont en butée circonférentielle pour un sens circonférentiel, qui, par exemple, et tel que schématisé à la flèche F sur les figures 1 et 24, est le sens normal de rotation de l'ensemble et correspond donc à un fonctionnement dit en «tirage» dudit ensemble pour lequel le couple moteur l'emporte sur le couple résistant, et, conjointement, les moyens d'engrènement à jeu 27' entre ledit voile intermédiaire 28 et le contre-voile de moyeu 26' sont en butée circonférentielle pour le sens circonférentiel opposé au précédent, qui correspond donc, lui, à un fonctionnement en «rétro» dudit ensemble, pour lequel le couple résistant l'emporte sur le couple moteur.

Suivant l'invention, entre les périphéries interne et externe du voile de moyeu 26 et du contre-voile de moyeu 26', il y a au moins une zone dudit voile de moyeu 26 et dudit contre-voile de moyeu 26', dite ici par simple commodité zone d'interpénétration, où ce voile de moyeu 26 et ce contre-voile de moyeu 26' s'interpénètrent axialement l'un par rapport à l'autre.

Dans la forme de réalisation représentée sur les figures 1 à 24, les zones d'action Z, Z' suivant lesquelles interviennent les moyens d'engrènement à jeu 27 entre le moyeu 25, et plus précisément le voile intermédiaire 28 de ce moyeu 25, d'une part, et le voile de moyeu 26, d'autre part, et ceux, 27', entre ce voile intermédiaire 28, d'une part, et le contre-voile de moyeu 26', d'autre part, appartiennent à une telle zone d'interpénétration désignée par ZP1 sur ces figures, lesdites zones d'action Z, Z' étant au moins en partie circonférentiellement sensiblement dans l'alignement l'une de l'autre.

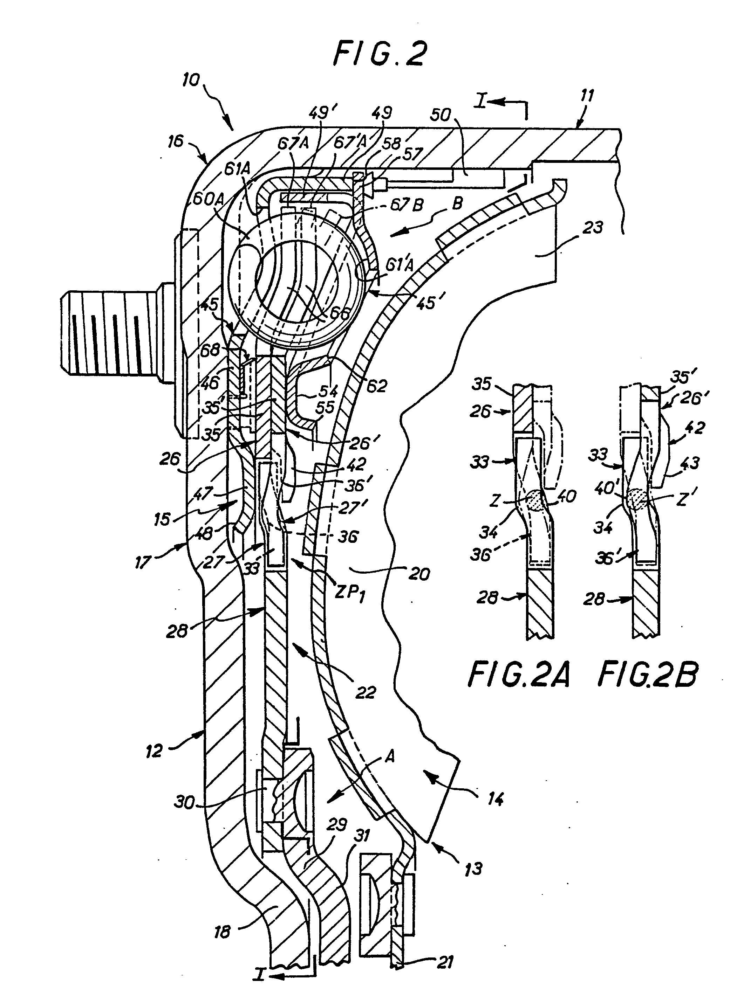

Pour leur matérialisation, les zones d'action Z, Z' ont été schématisées par des hachures sur les figures 2A, 2B.

Pour une meilleure clarté des figures 2A, 2B le contour de la dent 33 du voile intermédiaire 28 qui y est représentée a été accentué, tandis que les contours des dents 36, 36' correspondantes du voile de moyeu 26 et du contre-voile de moyeu 26' y sont alternativement en traits plus fins et en traits interrompus.

Dans la forme de réalisation représentée sur les figures 1 à 24, les zones d'action Z, Z' sont en pratique l'une et l'autre confinées dans l'épaisseur même du voile intermédiaire 28, en supposant affecter la zone médiane des flancs latéraux des dents 33 de celui-ci.

Pour qu'il en soit ainsi, les dents de l'un au moins des flasques que constituent la voile de moyeu 26 et le contre-voile de moyeu 26' sont au moins partiellement déportées axialement en direction de l'autre de ces flasques par rapport à la partie courante 35, 35' correspondante.

En fait, dans la forme de réalisation représentée, il en est ainsi tant pour le voile de moyeu 26 que pour le contre-voile de moyeu 26'.

En pratique, les dents 36 du voile de moyeu 26, qui, des flasques que constituent ce voile de moyeu 26 et le contre-voile de moyeu 26', est celui axialement le plus éloigné de la roue de turbine 13, ont leur extrémité 40 déportée axialement en direction de cette roue de turbine 13.

Conjointement, les dents 36' du contre-voile de moyeu 26', qui, des flasques en question, est celui axialement le plus proche de la roue de turbine 13, ont leur partie médiane 40' déportée en direction opposée à cette roue de turbine 13, une ondulation en demi-onde affectant à cet effet leur dite partie médiane.

Comme indiqué précédemment, et tant pour le voile de moyeu 26 que pour le contre-voile de moyeu 26', les déports axiaux précisés ci-dessus sont appréciés ici par rapport à la partie courante 35, 35' correspondante.

Ainsi qu'on le notera, et si l'on fait abstraction du propre déport axial de l'extrémité des dents 33 du voile intermédiaire 28, les zones d'action Z, Z' sur celles-ci des dents 36, 36' du voile de moyeu 26 et du contre-voile de moyeu 26' s'étendent globalement dans un même plan transversal de l'ensemble, qui est le plan de ce voile intermédiaire, à supposer celui-ci réduit à un tel plan.

En pratique, les dents 36 du voile de moyeu 26 alternent circonférentiellement avec celles 36' du contre-voile de moyeu 26'.

Pour la configuration de repos de l'ensemble, figures 1 et 24A, chaque dent 33 du voile auxiliaire 28 du moyeu 25 est encadrée, sans jeu, et donc avec butée circonférentielle, d'une part, d'un premier côté circonférentiel correspondant au sens circonférentiel repéré par la flèche F, par une dent 36 du voile de moyeu 26, et, du côté circonférentiel opposé au précédent, par une dent 36' du contre-voile de moyeu 26'.

De ce fait, celui des flancs latéraux ce ces dents 36, 36' par lesquelles celles-ci sont ainsi destinées à coopérer avec les dents 33 du voile intermédiaire 28 est oblique, à l'image des flancs latéraux de ces dents 33.

Par contre, et pour des raisons qui apparaîtront ci-après, l'autre des flancs des dents 36, 36' du voile de moyeu 26 et du contre-voile de moyeu 26' est droit, en s'étendant suivant une direction radiale de l'ensemble.

En pratique, les dents 36, 36' s'étendent globalement radialement en saillie à la périphérie interne de la partie courante 35, 35' du voile de moyeu 26 et du contre-voile de moyeu 26', en étant formé d'un seul tenant avec l'ensemble de ceux-ci, par découpe de flans initialement plats, comme le voile intermédiaire 28 du moyeu 25.

Dans la forme de réalisation représentée, et pour des raisons qui apparaîtront ci-après, le contre-voile de moyeu 26' présente, en outre, en saillie à sa périphérie interne, et en alternance avec ses dents 36', des pattes 42, qui, d'extension radiale moindre que celle desdites dents 36', sont, comme elles, mais en sens axialement opposé, déportées axialement par rapport à la partie courante 35' correspondante.

En pratique, par un décrochement axial, ces pattes 42 ont leur extrémité 43 déportée axialement en direction de la roue de turbine 13.

La partie B du dispositif amortisseur de torsion 15 comporte elle-même au moins un flasque, qui, communément dit rondelle de guidage, forme lui aussi une pièce annulaire autour du moyeu 25, mais qui est libre en rotation par rapport à celui-ci, tant dans un sens circonférentiel que dans le sens circonférentiel opposé.

En pratique, cette partie B comporte ainsi deux rondelles de guidage 45, 45', qui, disposées chacune respectivement de part et d'autre de l'ensemble constitué par le voile de moyeu 26 et le contre-voile de moyeu 26', sont solidaires en rotation l'une de l'autre.

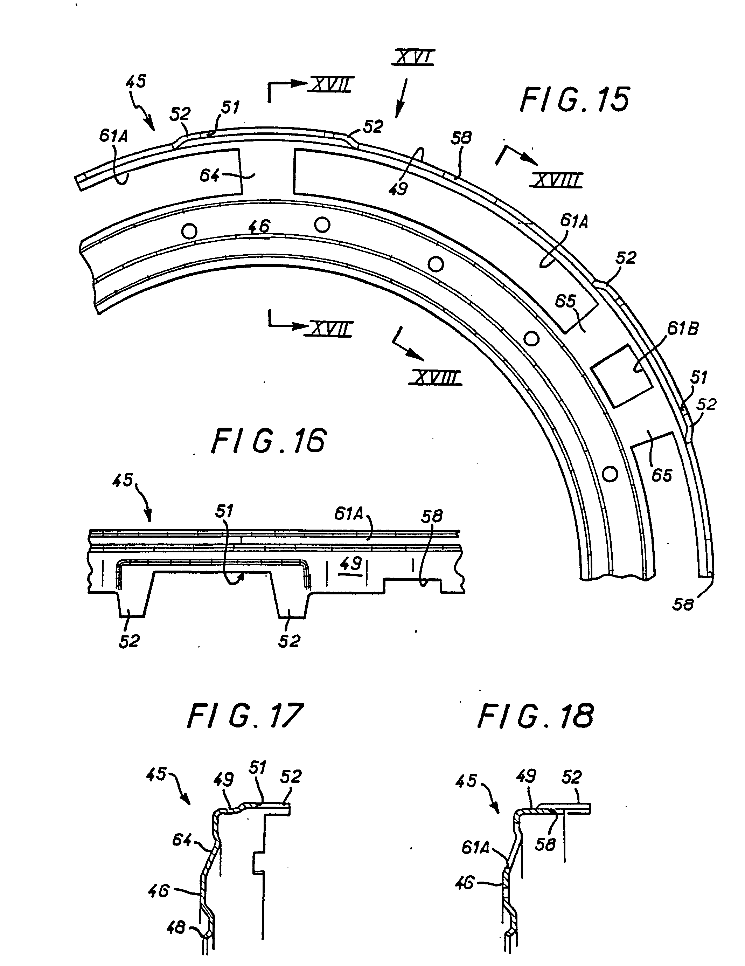

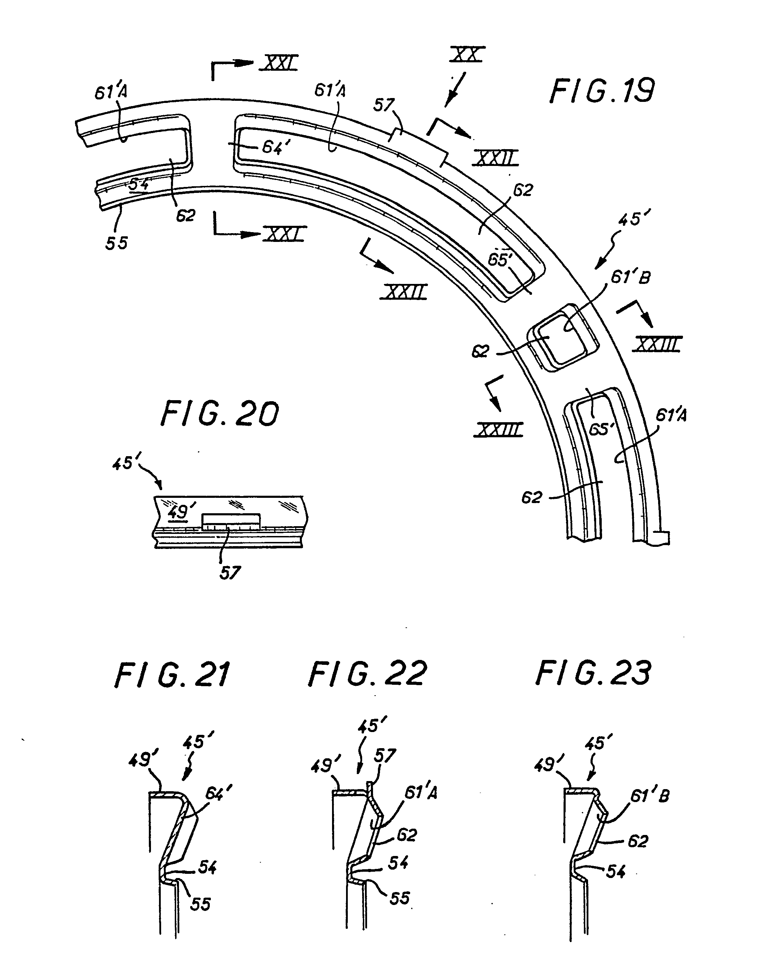

La rondelle de guidage 45, qui est celle axialement la plus proche de la paroi transversale 12 du couvercle 10 est représentée isolément sur les figures 15 à 18, et la rondelle de guidage 45', qui est celle axialement la plus proche de la roue de turbine 13, est représentée isolément sur les figures 19 à 23.

Par une zone médiane 46, qui se situe axialement au droit de la partie courante 35, 35' du voile de moyeu 26 et du contre-voile de moyeu 26', la rondelle de guidage 45 est en appui axial contre la paroi transversale 12 du couvercle 10.

Sa périphérie interne 47, qui se situe axialement au droit des moyens d'engrènement 27, 27', est déportée axialement en direction de la roue de turbine 13.

Elle définit, ainsi, conjointement avec les pattes 42 du voile de moyeu 26, un volume dans lequel se trouvent axialement confinés les moyens d'engrènement 27, 27' précédemment décrits.

De ce fait, les dents 33 du voile intermédiaire 28 du moyeu 25 participant à la constitution de ces moyens d'engrènement 27, 27' sont empêchées d'échapper axialement aux dents correspondantes 36, 36' du voile de moyeu 26 et du contre-voile de moyeu 26'.

Dans la forme de réalisation représentée, la périphérie interne 47 de la rondelle de guidage 45 présente le long de son bord, pour son raidissement, un repli 48, qui s'écarte en oblique de la rondelle de guidage 45' associée, et qui s'étend donc en direction de la paroi transversale 12 du couvercle 10.

A sa périphérie externe, la rondelle de guidage 45 comporte un prolongement axial 49, par lequel, dans la forme de réalisation représentée sur les figures 1 à 24, elle est solidarisée en rotation à la paroi cylindrique 11 du couvercle 10, et qui, dans cette forme de réalisation, constitue une virole circulairement continue.

Ce prolongement axial 49 s'étend en direction opposée à la paroi transversale 12 du couvercle 10.

Dans la forme de réalisation représentée, et suivant des dispositions qui, ne faisant pas partie de la présente invention, ne seront pas décrites en détail ici, la solidarisation en rotation de la rondelle de guidage 45 sur la paroi cylindrique 11 du couvercle 10 est assurée par des «tocs» 50, c'est-à-dire des cales, qui, en forme de coin, sont chacun individuellement engagés, en direction de la paroi transversale 12 de ce couvercle 10, dans des encoches 51 prévues à cet effet de manière complémentaire dans le prolongement axial 49 de cette rondelle de guidage 45.

En pratique, dans la forme de réalisation représentée, les portions d'un tel prolongement axial 49 dans lesquelles sont ménagées, chacune individuellement, les encoches 51, sont déportées radialement en direction opposée à l'axe de l'ensemble par rapport à la partie courante de ce prolongement axial 49, en sorte que, étant au contact de la paroi cylindrique 11 du couvercle 10, elles assurent avantageusement le centrage du dispositif amortisseur de torsion 15 dans ce couvercle 10.

En outre, dans la forme de réalisation représentée, les bords latéraux de chaque échancrure 51 se trouvent prolongés axialement par des pattes 52.

Quoi qu'il en soit, et ainsi qu'il est visible à la figure 3, chaque toc 50 mis en oeuvre est par exemple rapporté par soudage, et en pratique par soudage par points, sur la surface interne de la paroi cylindrique 11 du couvercle 10.

La périphérie interne 54 de la rondelle de guidage 45', s'étend axialement sensiblement au droit de la zone médiane 46 de la rondelle de guidage 45, et donc au droit de la partie courante 35, 35' du voile de moyeu 26 et du contre-voile de moyeu 26'.

Elle est sensiblement plane, et elle est au contact de la partie courante 35' du contre-voile de moyeu 26'.

Le long de son bord, elle comporte, pour son raidissement, un repli 55 qui s'écarte, en oblique, tel que représenté, ou en équerre, de la rondelle de guidage 45 associée, et qui s'étend donc en direction de la roue de turbine 13.

Pour tenir compte de la configuration propre du volume disponible, la rondelle de guidage 45' s'étend globalement en oblique par rapport à l'axe de l'ensemble à compter de sa périphérie interne 54, en suivant la courbure des aubes 14 de la roue de turbine 13.

Corollairement, la partie correspondante de la rondelle de guidage 45 s'étend elle aussi d'abord en oblique à compter de sa zone médiane 46, avant de redevenir droite à son raccordement au prolongement axial 49 qui lui fait suite.

A sa périphérie externe, la rondelle de guidage 45' comporte elle aussi, dans la forme de réalisation représentée, un prolongement axial 49'.

Mais, dans la forme de réalisation représentée sur les figures 1 à 24, celui-ci est emboîté dans le prolongement axial 49 de la rondelle de guidage 45, sans être nécessairement au contact de celui-ci, et il s'étend, donc, lui, en direction de la paroi transversale 12 du couvercle 10.

Dans la forme de réalisation représentée, la solidarisation en rotation de la rondelle de guidage 45' sur la rondelle de guidage 45 se fait par tenons et mortaises.

En pratique, à sa périphérie externe, la rondelle de guidage 45' présente radialement, de place en place, dans cette forme de réalisation, des tenons 57, qui, venus par exemple par crevés de son prolongement axial 49', sont chacun individuellement en prise avec des mortaises complémentaires 58 prévues à cet effet en correspondance sur la tranche du prolongement radial 49 de ladite rondelle de guidage 45, en alternance avec les encoches 51 de celui-ci.

Le maintien axial de l'ensemble est assuré par sertissage d'une portion au moins des bords de ces mortaises 58 sur les tenons 57 correspondants.

Dans la forme de réalisation représentée, les moyens élastiques à action circonférentielle prévus entre les parties A, B ainsi constituées du dispositif amortisseur de torsion 15 comportent deux étages d'organes élastiques de raideurs différentes.

Il s'agit, en pratique, de ressorts du type ressort à boudin.

Il y a donc ainsi, suivant un premier étage, des ressorts 60A, de raideur relativement faible, et, suivant un deuxième étage, des ressorts 60B, de raideur relativement forte, et, en pratique, de raideur notablement plus forte que celle des ressorts 60A précédents.

Dans la forme de réalisation représentée, les ressorts 60A, 60B sont tous disposés suivant une même circonférence de l'ensemble, et, pour leur maintien, ils sont chacun individuellement disposés, pour partie, dans des logements 61A, 61B prévus pour eux dans la rondelle de guidage 45, et, plus précisément, dans la partie, déformée axialement, de cette rondelle de guidage 45 s'étendant entre sa partie médiane 46 et sa périphérie externe, et, pour partie, dans des logements 61'A, 61'B également prévus pour eux dans la rondelle de guidage 45', et, plus précisément, dans la partie oblique de celle-ci.

S'agissant de la rondelle de guidage 45, les logements 61A, 61B sont de simples fenêtres.

S'agissant de la rondelle de guidage 45', les logements 61'A, 61'B sont des emboutis, dont chacun débouche aussi individuellement à l'extérieur, par une fenêtre 62, dans sa zone médiane.

Les ressorts de relativement faible raideur 60A ont chacun une extension circonférentielle relativement importante, et certains au moins d'entre eux sont associés par paires, les deux ressorts 60A d'une même paire s'étendant circonférentiellement l'un à la suite de l'autre.

Dans la forme de réalisation représentée, il en est ainsi pour tous les ressorts de relativement faible raideur 60A.

Dans les rondelles de guidage 45, 45', les loge-

ments 61A, 61'A correspondants ne sont ainsi séparés l'un de l'autre que par une barrette 64, 64' d'extension axiale relativement modérée.

Corollairement, les ressorts 60B de relativement forte raideur ont eux, chacun individuellement, une extension circonférentielle relativement modérée, et, chacun individuellement, ils sont circonférentiellement disposés entre deux paires de ressorts de relativement faible raideur 60A.

Dans les rondelles de guidage 45, 45', les logements 61B, 61'B correspondants sont séparés des logements 61A, 61'A qui les encadrent par des barrettes 65, 65' qui ont circonférentiellement une extension comparable à celle des barrettes 64 précédentes.

En pratique, cette extension circonférentielle est également comparable à celle des ressorts de relativement forte raideur 60B concernés.

De préférence, et tel que représenté, les encoches 51 que comporte le prolongement axial 49 de la rondelle de guidage 45 pour les tocs 50 sont établies, alternativement, radialement au droit des barrettes 64 de cette rondelle de guidage 45, et radialement au droit des logements 61B que comporte celle-ci.

Corollairement, les mortaises 58 que comporte la rondelle de guidage 45 pour les tenons 57 de la rondelle de guidage 45' sont établies radialement au droit de la zone médiane des logements 61A que comporte également cette rondelle de guidage 45.

Pour les deux rondelles de guidage 45, 45', les logements 61A, 61B, 61'A, 61'B des ressorts 60A, 60B ont même longueur circonférentielle, et, pour la configuration de repos de l'ensemble, les ressorts 60A, 60B sont disposés sans jeu, voire même, et de préférence, avec une légère précontrainte, dans leurs logements 61A, 61B, 61'A, 61'B respectifs.

Pour action sur ces ressorts 60A, 60B, les flasques que constituent le voile de moyeu 26 et le contre-voile de moyeu 26' de la partie A du dispositif amortisseur de torsion 15 suivant l'invention comportent, radialement en saillie à leur périphérie externe, des bras 67A, 67B, 67'A, 67'B.

Comme les dents 36, 36', ces bras 67A, 67B, 67'A, 67'B sont d'un seul tenant avec les flasques qu'ils équipent, en étant venus, avec eux, de flans initialement plats.

Pour la configuration de repos de l'ensemble, les bras 67A, 67'A, qui sont destinés à coopérer avec les seuls ressorts de relativement faible raideur 60A, sont superposés axialement les uns aux autres d'une des rondelles de guidage 45, 45' à l'autre, en étant également superposés axialement aux barrettes 64, 64' de ces rondelles de guidage 45, 45', entre les ressorts de relativement faible raideur 60A correspondants.

Il s'agit en pratique de bras qui, issus en oblique de la partie courante 35, 35' du voile de moyeu 26 et du contre-voile de moyeu 26', parallèlement aux parties obliques correspondantes des rondelles de guidage 45, 45', présentent chacun, dans leur zone médiane, un coude 66, au-delà duquel ils s'étendent ensuite chacun perpendiculairement à l'axe de l'ensemble.

Les bras 67B, 67'B sont destinés, eux, à agir soit sur un ressort de relativement faible raideur 60A, pour un premier sens circonférentiel, soit sur un ressort de relativement forte raideur 60B, pour le sens circonférentiel opposé au précédent.

Il s'agit, en pratique, de bras qui s'étendent globalement en oblique à compter de la partie courante 35, 35' du voile de moyeu 26 et du contre-voile de moyeu 26', parallèlement aux parties obliques correspondantes des rondelles de guidage 45, 45'.

Pour la configuration de repos de l'ensemble, les ressorts de relativement forte raideur 60B sont ainsi chacun individuellement encadrés, en ciseaux, par des bras 67B, 67'B appartenant, l'un, au voile de moyeu 26, l'autre, au contre-voile de moyeu 26'.

En pratique, ces bras 67B, 67'B sont, pour la configuration de repos de l'ensemble, chacun respectivement axialement superposés aux barrettes 65, 65' correspondantes du voile de moyeu 26 et du contre-voile de moyeu 26'.

Le dispositif amortisseur de torsion 15 ainsi constitué se complète par des moyens élastiques à action axiale propres à solliciter en direction l'un de l'autre le voile de moyeu 26 et le contre-voile de moyeu 26', aussi bien que pour solliciter l'ensemble de ceux-ci en direction d'une rondelle de guidage 45, 45', pour tarage élastique du frottement se développant entre ces divers organes lors de leur débattement angulaire les uns par rapport aux autres.

Dans la forme de réalisation représentée, ces moyens élastiques à action axiale sont constitués par une pluralité de ressorts à lame 68, qui, disposés sensiblement tangentiellement à une même circonférence de l'ensemble, prennent appui sur la rondelle de guidage 45, en étant calés circonférentiellement sur celle-ci, sensiblement au droit de la partie courante 35, 35' du voile de moyeu 26 et du contre-voile de moyeu 26' par lesquels les flasques que constituent ce voile de moyeu 26 et ce contre-voile de moyeu 26' sont au contact l'un de l'autre.

Ainsi qu'on le notera, le repli 55 que présente la rondelle de guidage 45' pour son raidissement se trouve sensiblement axialement au droit des ressorts à lame 68 constituant ainsi les moyens élastiques à action axiale mis en oeuvre.

Tel que mentionné ci-dessus, chaque dent 33 du voile intermédiaire 28 du moyeu 25 se trouve encadrée d'une part par une dent 36 du voile de moyeu 26 et d'autre part par une dent 36' du contre-voile de moyeu 26' pour la configuration de repos de l'ensemble, figure 24A.

Lorsque, en fonctionnement, un couple de rotation est appliqué au couvercle 10, et donc à la partie B du dispositif amortisseur de torsion 15, c'est normalement celle-ci qui, par l'intermédiaire des ressorts 60A, 60B, tend à entraîner, dans le même sens, celui repéré par la flèche F sur la figure 24A, la partie A de ce dispositif amortisseur de torsion 15.

Pour simplification de l'exposé, il sera cependant supposé ci-après que, à l'inverse, c'est alors cette partie A qui, suivant le sens repéré par la flèche F' sur la figure 24A, opposé à celui repéré par la flèche F et supposé correspondre à un fonctionnement en «tirage» de l'ensemble, tend à entraîner la partie B.

Dans un premier temps, figure 24B, seul intervient, sous la sollicitation du voile intermédiaire 28 du moyeu 25, le voile de moyeu 26 de la partie A.

Seuls cèdent donc d'abord élastiquement les ressorts de relativement faible raideur 60A sur lesquels agissent les bras 67A, 67B du voile de moyeu 26, cependant que, malgré la sollicitation d'entraînement dont il est corollairement l'objet par frottement, le contre-voile de moyeu 26' reste dans sa position initiale du fait de l'appui qu'il trouve, par ses bras 67'B. sur les ressorts de relativement forte raideur 60B.

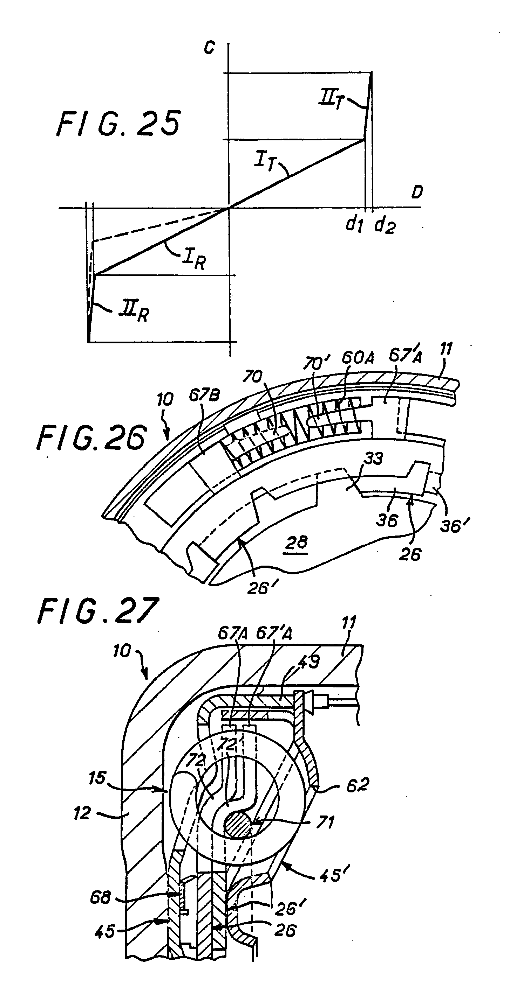

Sur le diagramme de la figure 25, sur lequel il a été reporté, en abscisses, le débattement angulaire D entre les parties A, B du dispositif amortisseur de torsion 15, et, en ordonnées, le couple C transitant d'une de ces parties à l'autre, la courbe représentative de cette première phase de fonctionnement est une droite IT, dont la pente, relativement faible, est à l'image de la raideur des ressorts de relativement faible raideur 60A alors seuls en action.

Cette première phase de fonctionnement se poursuit jusqu'à ce que, pour une valeur d1 du débattement angulaire D, les dents 36 du voile de moyeu 26 viennent au contact, par leur flanc droit, du flanc droit correspondant des dents 36' du contre-voile de moyeu 26'.

Dès lors, sous la sollicitation du voile intermédiaire 28 du moyeu 25, qui poursuit son action dans le sens de la flèche F' de la figure 24B, le contre-voile de moyeu 26' se trouve entraîné, à son tour, par l'intermédiaire du voile de moyeu 26.

Ainsi, suivant l'invention, lors du débattement angulaire de l'ensemble, il y a alors, pour le sens circonférentiel considéré, un entraînement circonférentiel du contre-voile 26' par le voile de moyeu 26.

Sous la sollicitation des bras 67'B du contre-voile de moyeu 26', les ressorts de relativement forte raideur 60B entrent donc à leur tour en action, en ajoutant leurs effets à ceux des ressorts de relativement faible raideur 60A, qui continuent à être comprimés.

Sur le diagramme de la figure 25, la courbe représentative de cette deuxième phase de fonctionnement est une droite IIT dont la pente, largement supérieure à celle de la droite IT précédente, est à l'image de la raideur, additionnée, des ressorts de relativement forte raideur 60B et des ressorts de relativement faible raideur 60A.

Cette deuxième phase de fonctionnement se poursuit jusqu'à ce que, pour une valeur d2 du débattement angulaire D, il y ait, par exemple, circonférentiellement soit un appui élastique de la partie A sur les ressorts 60A, 60B, soit un appui positif de cette partie A sur la partie B, figure 24C.

Cet appui positif peut être obtenu soit par venue à spires jointives de l'un au moins quelconque des ressorts en jeu, en pratique un ressort de relativement forte raideur 60B, soit en prévoyant une butée, ici non représentée, entre les parties A, B concernées.

Lorsque le couple entre les parties A, B s'inverse, selon un fonctionnement en «rétro» de l'ensemble, il y a tout d'abord, dans un premier temps, une détente, relativement rapide et quasi instantanée, des ressorts 60B, 60A, avec retour à la position initiale de repos de l'ensemble, puis, successivement, suivant un processus analogue à celui décrit précédemment, et donc suivant des droites IR, IIR analogues aux précédentes, une recompression, en sens circonférentiel opposé au précédent, d'abord des ressorts de relativement faible raideur 60A, puis des ressorts de relativement forte raideur 60B.

Mais c'est alors le contre-voile de moyeu 26' qui intervient le premier, sous la sollicitation du voile intermédiaire 28 du moyeu 25, avant que, par son intermédiaire, le voile de moyeu 26 soit lui aussi l'objet d'un entraînement circonférentiel dans le sens circonférentiel correspondant.

Bien entendu, dans ce qui précède, et pour simplifier l'exposé, il a été fait volontairement abstraction du phénomène d'hystérésis dû au frottement se développant au cours du débattement angulaire entre les divers constituants du dispositif amortisseur de torsion 15 concerné.

Dans la forme de réalisation représentée, ce frottement est notamment dû au contact prévu à cet effet entre les divers flasques en cause.

Il va de soi que, si désiré, des rondelles de frottement peuvent être interposées entre ces flasques, pour ajustement à une valeur désirée des couples de frottement correspondants.

Quoi qu'il en soit, et ainsi qu'on le sait, le phénomène d'hystérésis qui en résulte conduit à une différentiation, pour une même valeur du débattement angulaire D, entre les valeurs du couple lors d'une évolution croissante de celui-ci, et sa valeur lors de son évolution décroissante.

De préférence, il est associé aux ressorts 60A, 60B, et plus précisément aux ressorts de relativement faible raideur 60A qui y sont plus sensibles parce que d'extension circonférentielle plus étendue et de raideur plus faible, des moyens de rétention propres à les retenir radialement à l'encontre de la force centrifuge.

Par exemple, et tel que schématisé en traits interrompus sur les figures 11 et 7 et représenté en trait plein sur la figure 26, ces moyens de rétention peuvent comporter des doigts 70, 70', qui font saillie circonférentiellement sur les bras 67A, 67B, 67'A, 67'B du voile de moyeu 26 et du contre-voile de moyeu 26', dans un sens circonférentiel pour le voile de moyeu 26, et dans le sens circonférentiel opposé pour le contre-voile de moyeu 26', et sur lesquels sont circonférentiellement engagés les ressorts de relativement faible raideur 60A.

De préférence, et tel que représenté, ces doigts 70, 70' sont effilés en direction de leur extrémité libre, pour faciliter l'engagement successif sur eux des diverses spires de ces ressorts de relativement faible raideur 60A lors de leur compression, avec leur bord radialement le plus interne coaxial de l'axe de l'ensemble.

Suivant la variante de réalisation illustrée par la figure 27, les moyens de rétention mis en oeuvre comportent un jonc 71, sur lequel sont engagés, aussi bien les ressorts de relativement faible raideur 60A que les ressorts de relativement forte raideur 60B, et qui est lui-même calé radialement sur certains au moins des bras 67A, 67B, 67'A, 67'B du voile de moyeu 26 et du contre-voile de moyeu 26'.

Par exemple, et tel que représenté, pour le calage radial de ce jonc 71, les bras concernés du voile de moyeu 26 et du contre-voile de moyeu 26' comportent un coude 72, 72'.

Dans ce qui précède, les moyens d'engrènement à jeu 27 entre le moyeu 25, et plus précisément le voile intermédiaire 28 de celui-ci, d'une part, et le voile de moyeu 26, d'autre part, et ceux 27' entre ce voile intermédiaire 28 et le contre-voile de moyeu 26' s'étendent radialement légèrement au-delà de la zone médiane 20, ou renflement, des aubes 14 de la roue de turbine 13 par rapport à l'axe de l'ensemble, au voisinage dudit renflement.

Seul donc s'étend au droite de celui-ci, le voile intermédiaire 28.

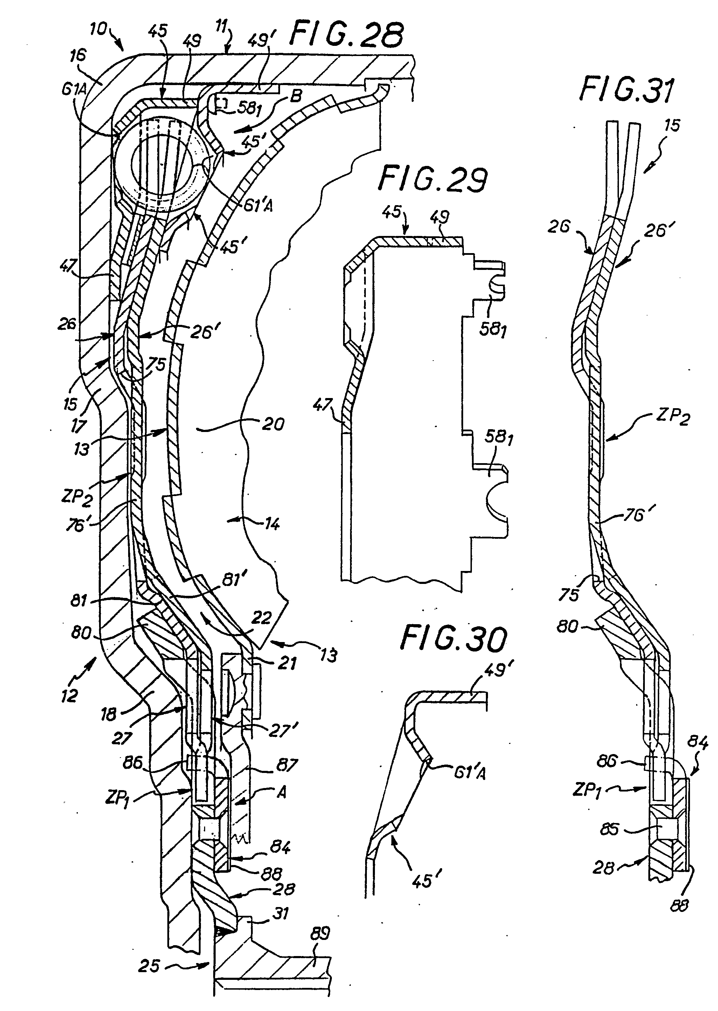

En variante, dans la forme de réalisation représentée sur les figures 28 à 41, ces moyens d'engrènement à jeu 27, 27' s'étendent entre l'axe de l'ensemble et le renflement de la roue de turbine 13.

Mais, radialement à distance de leur périphérie interne, le voile de moyeu 26 et le contre-voile de moyeu 26' comportent alors une zone d'interpénétration ZP2, ou zone d'interpénétration intermédiaire, et cette zone d'interpénétration intermédiaire ZP2 est précisément établie au droit de la zone médiane 20, ou renflement, des aubes 14 de la roue de turbine 13.

Globalement, le long de la zone d'interpénétration intermédiaire ZP2, l'un au moins des flasques que constituent le voile de moyeu 26 et le contre-voile de moyeu 26' comporte au moins un évidement 75, 75', une fenêtre par exemple, tel que représenté, et l'autre comporte une portion 76, 76', dite ci-après par simple commodité portion d'engagement, engagée axialement dans un tel évidement 75, 75'.

Cette portion d'engagement 76, 76' a, ici, et pour des raisons qui apparaîtront ci-après, une extension circonférentielle inférieure à celle de l'évidement 75, 75' dans lequel elle est engagée.

De préférence, et tel que représenté, l'un au moins de ces flasques, et en pratique chacun d'eux, comporte circonférentiellement une alternance de portions d'engagement 76, 76' et d'évidements 75, 75', et la disposition en est la même pour l'un et l'autre d'entre eux.

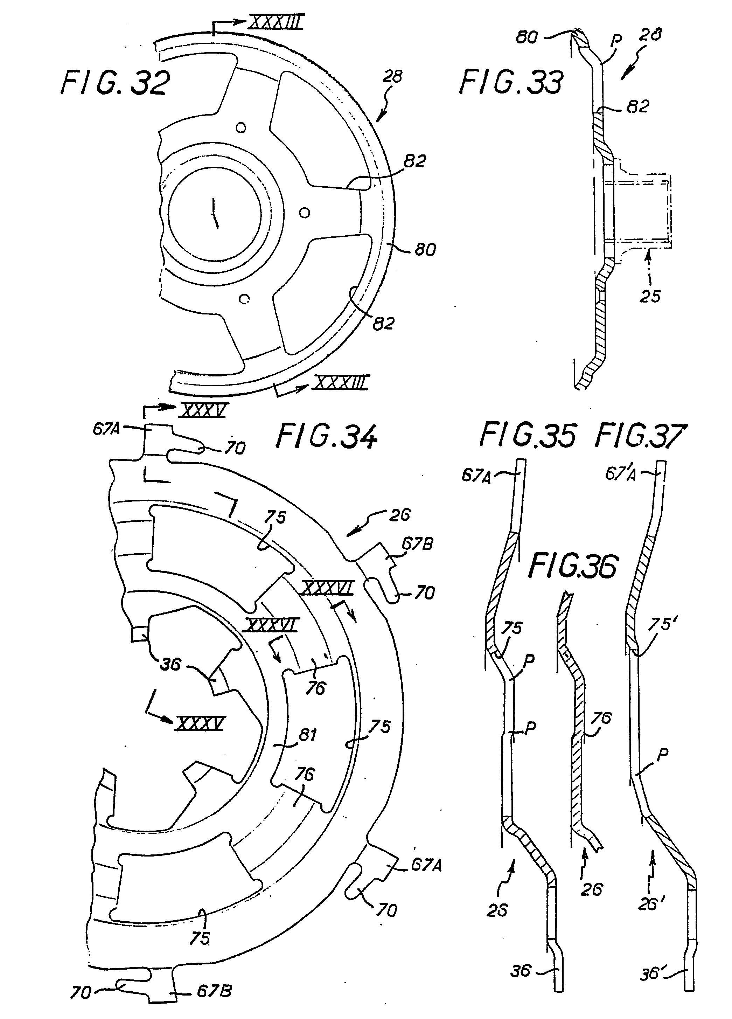

C'est la raison pour laquelle, sur les figures, seul le voile de moyeu 26 a été représenté isolément en élévation, figure 34.

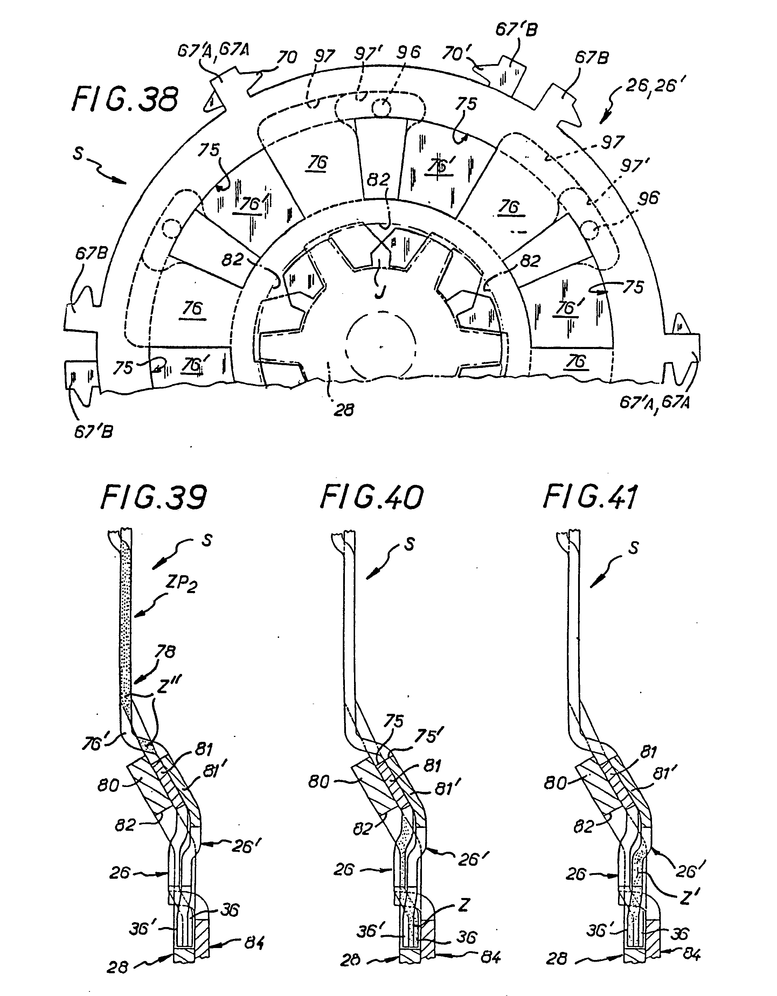

Il doit donc être entendu que, tel que schématisé à la figure 38, le contre-voile de moyeu 26' a, en élévation, une découpe semblable à celle du voile de moyeu 26, avec cependant un décalage angulaire de ses évidements 75' et de ses portions d'engagement 76' par rapport aux évidements 75 et aux portions d'engagement 76 de ce voile de moyeu 26, pour une interpénétration relative, du voile de moyeu 26 au contre-voile de moyeu 26', et réciproquement, desdites portions d'engagements 76, 76' et desdits évidements 75, 75'.

En pratique, pour une telle interpénétration, les portions d'engagement 76, 76' comportent, radialement, c'est-à-dire dans un plan radial, au moins un coude de pliage P, et, de même, le bord des évidements 75, 75' correspondants comporte, radialement, c'est-à-dire dans un plan radial, au moins un coude de pliage P, tel que représenté.

Le voile de moyeu 26 et le contre-voile de moyeu 26' ayant en fait, l'un et l'autre, dans la forme de réalisation représentée, et pour en faciliter l'implantation dans le volume imparti, des configurations plus ou moins tourmentées, le bord de leurs évidements 75, 75' et leurs portions d'engagement 76, 76' présentent, radialement plusieurs coudes de pliage.

De préférence, les évidements 75, 75' et les portions d'engagements 76, 76' ainsi prévus sur les flasques que constituent le voile de moyeu 26 et le contre-voile de moyeu 26' forment pour lesdits flasques des moyens d'engrènement à jeu 78.

Sur la figure 39, il est schématisé, en grisé, les zones d'action Z'' suivant lesquelles, par leur tranche, interviennent, pour la constitution de ces moyens d'engrènement à jeu 78, ces portions d'engagement 76, 76' et ces évidements 75, 75'.

En pratique, ce sont par les moyens d'engrènement à jeu 78 ainsi constitués que, lors de la deuxième phase de fonctionnement, c'est-à-dire lors de la deuxième phase du débattement angulaire entre les parties coaxiales A, B, il y a, suivant la droite $II_T$ ou $II_R$ du diagramme de la figure 25, un entraînement circonférentiel d'un des flasques que constituent le voile de moyeu 26 et le contre-voile de moyeu 26' par l'autre.

Ainsi, comme précédemment, un tel entraînement circonférentiel intervient à la faveur d'une zone d'interpénétration, en l'espèce la zone d'interpénétration intermédiaire ZP2, de ce voile de moyeu 26 et de ce contre-voile de moyeu 26'.

Comme précédemment, le moyeu 25 comporte transversalement, pour la constitution des moyens d'engrènement à jeu 27, 27', un flasque, ou voile intermédiaire, 28, représenté isolément sur les figures 32 et 33.

Dans la forme de réalisation représentée, ce voile intermédiaire 28 présente, circulairement, au moins une barrette circulairement continue 80, contre laquelle sont axialement les appui les flasques que constituent le voile de moyeu 26 et le contre-voile de moyeu 26', à savoir, directement, ledit voile de moyeu 26, et, indirectement, par l'intermédiaire de celui-ci, ledit contre-voile de moyeu 26'.

En pratique, cette barrette circulairement continue 80 forme la périphérie externe du voile intermédiaire 28, c'est-à-dire sa périphérie de plus grand diamètre, et, pour son appui contre elle, le voile de moyeu 26 et le contre-voile de moyeu 26' comportent eux-mêmes, chacun, à son droit, une barrette circulairement continue 81, 81'.

Dans la forme de réalisation représentée, ces barrettes circulairement continues 80, 81, 81' sont obliques sur l'axe de l'ensemble.

Pour le voile de moyeu 26 et le contre-voile de moyeu 26', les barrettes circulairement continues 81, 81' s'étendent, radialement, entre, d'une part, leurs évidements 75, 75' et portions d'engagement 76, 76', et, d'autre part, les dents 36, 36' que, comme précédemment, ils présentent à leur périphérie interne, c'est-à-dire à leur périphérie de plus petit diamètre.

Pour coopération avec ces dents 36, 36', c'est-à-dire pour constitution des moyens d'engrènement à jeu 27, 27' correspondants, le voile intermédiaire 28 comporte, circulairement, de place en place, des évidements 82, figures 32, 33 et 38 à 41.

Pour rendre possible l'engagement radial des dents 36, 36' du voile de moyeu 26 et du contre-voile de moyeu 26' dans ces évidements 82 du voile intermédiaire 28, les bords de ces évidements 82 comportent radialement, c'est-à-dire dans un plan radial, tel que représenté, au moins un coude de pliage P, figure 33.

Au droit des moyens d'engrènement à jeu 27, 27', il y a encore, comme précédemment, une zone d'interpénétration ZP1, mais, à la différence de la disposition précédente, celle-ci n'affecte plus que l'extrémité libre des dents 36, 36' correspondantes du voile de moyeu 26 et du contre-voile de moyeu 26'.

Autrement dit, dans la forme de réalisation représentée sur les figures 28 à 41, c'est seulement à leur extrémité libre que les zones d'action Z, Z' des dents 36, 36' du voile de moyeu 26 et du contre-voile de moyeu 26' sont au moins en partie circonférentiellement sensiblement dans l'alignement l'une de l'autre.

Dans leur autre portion, ces dents 36, 36' s'étendent en effet par contre suivant des plans transversaux différents, le contour de leur tranche se superposant en tout ou partie, dans un plan axial, celui des figures 28, 31 et 39 à 41, au contour du bord de l'évidement 82 correspondant du voile intermédiaire 28.

En outre, dans cette forme de réalisation, si, comme précédemment, les dents 36 du voile de moyeu 26, par exemple, sont, pour la configuration de repos de l'ensemble, en appui circonférentiel contre le moyeu 25, et plus précisément, contre le voile intermédiaire 28 de celui-ci, pour un premier sens circonférentiel, alors que, conjointement, les dents 36' du contre-voile de moyeu 26' sont en appui circonférentiel contre le voile intermédiaire 28 dans le sens circonférentiel opposé au précédent, une dent 36 du voile de moyeu 26 et une dent 36' du contre-voile de moyeu 26' étant conjointement engagées à cet effet dans un même évidement 82 de ce voile intermédiaire 28, aux extrémités circonférentielles opposées de celui-ci, figure 38, le jeu circonférentiel J entre ces dents 36, 36' est fait suffisamment important pour que, au cours du débattement angulaire entre les parties coaxiales A, B, leurs extrémités libres ne viennent jamais circonférentiellement au contact l'une de l'autre malgré leur interpénétration axiale, l'entraînement circonférentiel d'un des flasques que constituent ce voile de moyeu 26 et ce contre-voile de moyeu 26' par l'autre se faisant, comme indiqué précédemment, à la faveur de leurs évidements 75, 75' et de leurs portions d'engagement 76, 76'.

Ainsi, l'interpénétration axiale des extrémités libres des dents 36, 36' du voile de moyeu 26 et du contre-voile de moyeu 26' n'a pas pour d'autres fonctions, dans ce cas, dans la zone d'interpénétration ZP1 concernée, que de diminuer l'encombrement axial de l'ensemble à ce niveau.

De préférence, et tel que représenté, le voile intermédiaire 28 et les flasques que constituent le voile de moyeu 26 et le contre-voile de moyeu 26' appartiennent à un sous-ensemble S, représenté isolément notamment à la figure 31, une portion au moins desdits flasques, en pratique celle définie par leurs dents 36, 36', se trouvant axialement disposée entre ledit voile intermédiaire 28, et plus précisément la barrette circulairement continue 80 de celui-ci, d'une part, et une plaquette annulaire 84, rapportée sur ce voile intermédiaire 28.

Dans la forme de réalisation représentée, cette plaquette annulaire 84 est rapportée sur le voile intermédiaire 28 par des rivets 85, du côté de celui-ci opposé à celui sur lequel fait saillie obliquement sa barrette circulairement continue 80.

En variante, et tel qu'également représenté, cette plaquette annulaire 84 peut présenter, le long de sa périphérie externe, c'est-à-dire le long de sa périphérie de plus grand diamètre, des pattes 86, qui s'étendent axialement, et qui, pour son sertissage sur le voile intermédiaire 28, sont engagées dans des évidements prévus à cet effet dans celui-ci, en substitution aux rivets 85 précédents.

En outre, dans cette forme de réalisation, cette plaquette annulaire 84 sert de plaque d'appui à la bride 87 portant la roue de turbine 13, figure 28.

Elle présente donc de préférence en surface un revêtement 88 approprié, et par exemple une couche de matériau anti-friction.

Bien entendu, le moyeu proprement dit 89, c'est-à-dire la partie axiale du moyeu 25 sur laquelle est rapporté le voile intermédiaire 28, fait aussi partie du sous-ensemble S.

Dans la forme de réalisation représentée, le voile intermédiaire 28 est rapporté par soudage sur la bride transversale 31, en l'espèce d'extension radiale réduite, de ce moyeu proprement dit 89.

Dans la forme de réalisation représentée sur les figures 28 à 41, les logements 61A, 61B prévus sur la rondelle de guidage 45 pour les ressorts 60A, 60B sont des embouts, comme les logements 61'A, 61'B correspondants de la rondelle de guidage 45'.

En outre, au montage, c'est par le bord de ces logements 61A, 61B radialement le plus éloigné de l'axe de l'ensemble que se fait de préférence, in fine, l'appui de cette rondelle de guidage 45 sur la paroi globalement transversale 12 du couvercle 10, en sus de l'appui préalablement assuré par sa périphérie interne 47, ici sensiblement plane, lors de sa mise en place dans ce dernier.

Par ailleurs, dans la forme de réalisation représentée, le prolongement axial 49 de la rondelle de guidage 45 présente, non plus des mortaises, comme précédemment, mais des tenons $58_1$.

En effet, dans cette forme de réalisation, l'assujettissement de l'ensemble au couvercle 11, qui, comme précédemment, est assuré par des «tocs» 50, non visibles sur les figures, se fait par l'intermédiaire de la rondelle de guidage 45', au lieu de se faire par celui de la rondelle de guidage 45.

A cet effet, le prolongement axial 49' de la rondelle de guidage 45' s'étend, non plus en direction de la paroi globalement transversale 12 du couvercle 10, mais en direction opposée à cette paroi globalement transversale 12, au contact de la paroi globalement cylindrique 11 associée.

En outre, de place en place, la rondelle de guidage 45' présente des évidements propres au passage des tenons $58_1$ de la rondelle de guidage 45, et, au-delà de ces évidements, non visibles sur les figures, ces tenons $58_1$ sont sertis, tel que représenté en trait plein à la figure 28.

Enfin, dans la forme de réalisation représentée, la rondelle de guidage 45' n'a pas de repli de raidissement à sa périphérie interne, c'est-à-dire à sa périphérie de plus petit diamètre.

Pour le reste, les dispositions sont du type de celles décrites précédemment, et le fonctionnement en est semblable.

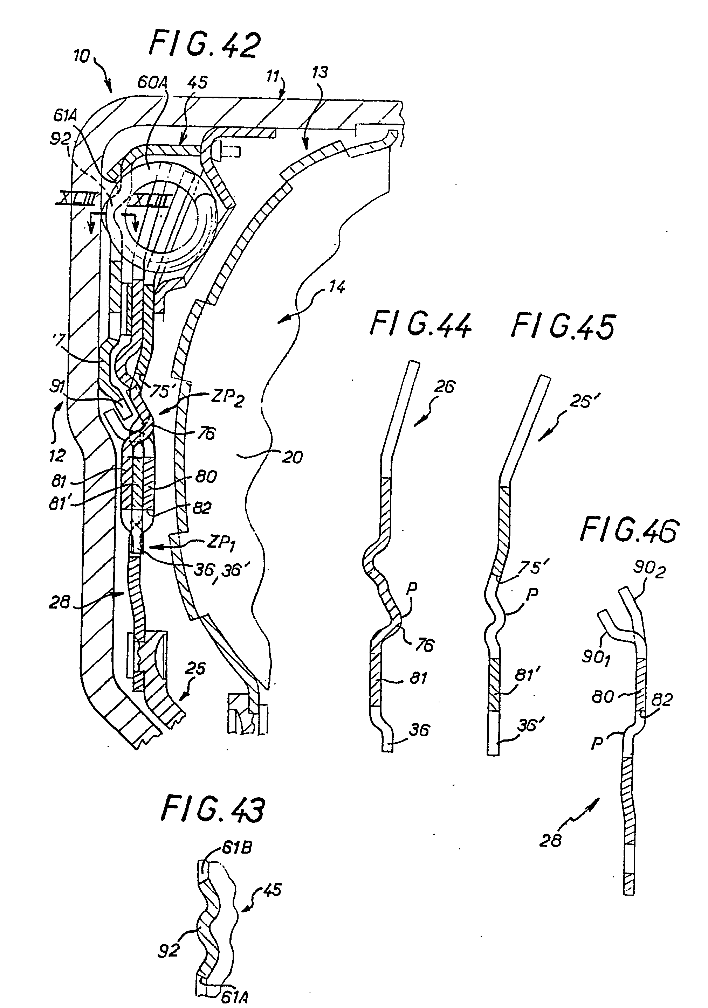

Dans la variante de réalisation représentée sur la figure 42, le voile intermédiaire 28, qui, comme dans la forme de réalisation représentée sur les figures 1 à 24, est rapporté par sertissage sur une bride 31 d'extension radiale relativement notable du moyeu 25, comporte toujours, comme dans la variante de réalisation représentée sur les figures 28 à 41, une bride circulairement continue 80, pour l'appui axial du voile de moyeu 26 et du contre-voile de moyeu 26', ledit voile de moyeu 26 et ledit contre-voile de moyeu 26' comportant à cet effet eux-mêmes des brides circulairement continues 81, 81', mais, à sa périphérie de plus grand diamètre, c'est-à-dire à la périphérie de cette barrette circulairement continue 80, ce voile intermédiaire 28 présente, radialement, de place en place, des dents $90_1$, $90_2$, qui sont alternativement décalées axialement les unes par rapport aux autres, dans un premier sens axial pour les dents $90_1$, et dans le sens axial opposé pour les dents $90_2$, et par lesquelles, suivant un montage du type à baïonnette, il encadre la périphérie interne, c'est-à-dire la périphérie de plus petit diamètre, de celle des rondelles de guidage 45, 45' dont il est axialement opposé par rapport aux flasques que constituent ce voile de moyeu 26 et ce contre-voile de moyeu 26', et donc, en l'espèce, de la rondelle de guidage 45, ladite périphérie de plus petit diamètre de cette rondelle de guidage 45 présentant elle-même à cet effet, de place en place, des dents 91.

Autrement dit, les dents $90_1$ du voile intermédiaire 28 sont d'un premier côté des dents 91 de la rondelle de guidage 45, entre celle-ci et la paroi globalement transversale 12 du couvercle 10, et les dents $90_2$ du voile intermédiaire 28 sont de l'autre côté de ces dents 91.

Comme dans la variante de réalisation représentée sur les figures 42 à 46, deux zones d'interpénétration sont prévues entre le voile de moyeu 26 et le contre-voile de moyeu 26', une, ZP1, n'intéressant que l'extrémité libre des dents 36, 36' de ce voile de moyeu 26 et de ce contre-voile de moyeu 26', toutes engagées par une telle extrémité libre dans des évidements 82 du voile intermédiaire 28, avec, les unes par rapport aux autres, un jeu circonférentiel au repos suffisant pour ne pas venir au contact les unes des autres lors du débattement angulaire des parties coaxiales A, B, l'autre, ZP2, intervenant à la faveur d'évidements 75, 75' et de portions d'engagement 76, 76', à coude de pliage P, de ce voile de moyeu 26 et de ce contre-voile de moyeu 26'.

En pratique, dans la forme de réalisation représentée, ces zones d'interpénétration ZP1, ZP2 interviennent l'une et l'autre sensiblement à niveau avec la zone médiane 20, ou renflement, des aubes 14 de la roue de turbine 13, de part et d'autre de celle-ci.

Ainsi qu'il est aisé de le comprendre, le montage à baïonnette prévu entre le voile intermédiaire 28 et la rondelle de guidage 45 permet, avantageusement, au montage, avant l'intervention des «tocs» 50 sur la rondelle de guidage 45', et, ensuite, en fonctionnement, un maintien axial convenable du voile de moyeu 26 et du contre-voile de moyeu 26' vis-à-vis de la rondelle de guidage 45 préalablement mise en place dans le couvercle 10, et donc, vis-à-vis de l'ensemble.

Par ailleurs, dans la forme de réalisation représentée sur les figures 42 à 46, l'appui de cette rondelle de guidage 45 sur la paroi globalement transversale 12 du couvercle 10 se fait, outre sa périphérie interne 47, c'est-à-dire sa périphérie de plus petit diamètre, par des bossages 92 prévus axialement en saillie sur cette rondelle de guidage 45 entre les logements 61A, 61B qu'elle présente pour les ressorts 60A, 60B.

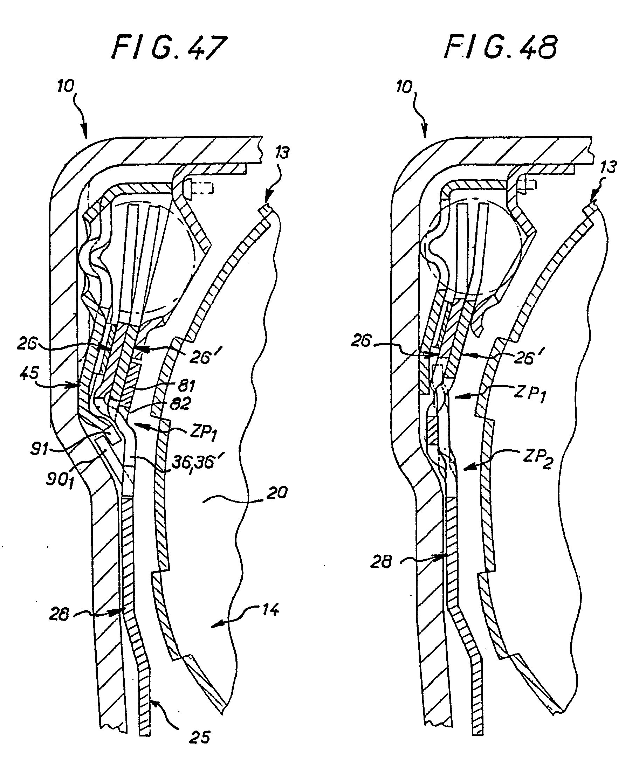

Dans la variante de réalisation illustrée par la figure 47, un montage à baïonnette est encore prévu entre le voile intermédiaire 28 du moyeu 25 et la rondelle de guidage 45 pourvue à cet effet de dents 91 à sa périphérie interne, mais, pour ce faire, seules des dents $90_1$ sont spécifiquement prévues sur ce voile intermédiaire 28, le montage à baïonnette en question se faisant, pour celui-ci, outre ces dents, par sa partie courante, au niveau de ses évidements 82; autrement dit, dans un tel cas, ladite partie courante forme par elle-même l'équivalent des dents $90_2$ précédentes.

En outre, dans cette variante de réalisation, il n'est prévu qu'une zone d'interpénétration ZP1 pour le voile de moyeu 26 et le contre-voile de moyeu 26', légèrement radialement au-delà de la zone médiane 20, ou renflement, des aubes 14 de la roue de turbine 13 par rapport à l'axe de l'ensemble, les dents 36, 36' de ce voile de moyeu 26 et de ce contre-voile de moyeu 26' pénétrant à cet effet dans les évidements 82 du voile intermédiaire 28.

Comme précédemment, à sa périphérie interne, ce voile intermédiaire 28 forme une barrette circulairement continue 81, pour appui axial du voile de moyeu 26 et du contre-voile de moyeu 26', du côté de ce voile de moyeu 26 et de ce contre-voile de moyeu 26' opposé à la rondelle de guidage 45.

A la figure 48 est donnée une autre configuration possible pour deux zones d'interpénétration ZP1, ZP2 entre le voile de moyeu 26 et le contre-voile de moyeu 26', pour illustrer la diversité de mise en oeuvre de l'invention.

Dans ce qui précède, il a été supposé que, du fonctionnement en «tirage» au fonctionnement en «rétro», les dispositions adoptées interviennent de manière symétrique par rapport à la configuration de repos de l'ensemble.

Il n'en est évidemment pas nécessairement ainsi.

Au contraire, et tel que schématisé par des traits interrompus sur le diagramme de la figure 25, la pente de la droite IR, représentative du fonctionnement en «rétro», peut par exemple être réduite, et par exemple être réduite de moitié, soit en différenciant en conséquence les ressorts de relativement faible raideur 60A, dont certains interviennent seulement en «tirage» et les autres seulement en «rétro», soit en supprimant un ou deux des bras 67'A du contre-voile de moyeu 26, pour rendre inactifs en «rétro» les ressorts de relativement faible raideur 60A normalement concernés par ceux-ci.

La présente invention ne se limite d'ailleurs pas aux formes de réalisation décrites et représentées, mais englobe toute variante d'exécution et/ou de combinaison de leurs divers éléments.

En particulier, il peut être prévu, axialement en saillie sur la paroi transversale du couvercle, des pions propres à un centrage du dispositif amortisseur de torsion dans ledit couvercle préalablement à la solidarisation sur celui-ci d'une de ses parties coaxiales, voire même à cette solidarisation, lesdits pions formant alors à cet effet des rivets, et des boutonnières étant alors prévues pour la tête de ceux-ci dans le voile du moyeu et le contre-voile de moyeu, pour ne pas interférer avec eux, tel que schématisé en traits interrompus à la figure 38, en 96 pour les pions en question et en 97, 97' pour les boutonnières correspondantes.

Conjointement, la solidarisation entre eux des deux flasques que comporte usuellement la partie en question de ce dispositif amortisseur de torsion ne se fait pas nécessairement par tenons et mortaises, mais peut au contraire se faire par exemple aussi bien par des entretoises axiales reliant l'un à l'autre ces deux flasques.

De plus, il peut être envisagé, pour le frottement nécessaire à l'obtention d'une hystérésis, de mettre au montage sous précontrainte axiale, le voile de moyeu et le contre-voile de moyeu, ledit voile de moyeu et ledit contre-voile de moyeu se comportant alors à la manière de rondelles Belleville, ce qui peut permettre de s'affranchir de mettre en oeuvre pour ce faire de quelconques ressorts à action axiale spécifiques.

Enfin, au lieu de ne comporter que deux parties coaxiales, le dispositif amortisseur de torsion peut en comporter un nombre supérieur, et par exemple trois, un premier étage de relativement faible raideur étant par exemple ajouté pour augmenter encore le débattement angulaire aux faibles valeurs du couple, et/ou les organes élastiques correspondants avoir une répartition différente de celle, par paires, plus particulièrement explicitée.

## Revendications

1. Dispositif amortisseur de torsion, notamment pour véhicule automobile, du genre comportant au moins deux parties coaxiales (A, B) montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir une première partie (A) comportant, d'une part, un moyeu (25), et, d'autre part, deux flasques (26, 26'), dits ici par simple commodité voile de moyeu et contre-voile de moyeu, qui forment chacun une pièce annulaire autour dudit moyeu (25), et dont chacun engrène avec ledit moyeu (25) par des moyens d'engrènement à jeu (27, 27'), avec, pour la configuration de repos de l'ensemble, une disposition alternée suivant laquelle les moyens d'engrènement à jeu (27) entre le moyeu (25) et le voile de moyeu (26) sont en butée circonférentielle pour un sens circonférentiel, et, conjointement, les moyens d'engrènement à jeu (27') entre ledit moyeu (25) et le contre-voile de moyeu (26') sont en butée circonférentielle pour le sens circonférentiel opposé au précédent, et une deuxième partie (B) comportant elle-même au moins un flasque (45, 45'), communément dit rondelle de guidage, qui forme lui aussi une pièce annulaire autour du moyeu, mais qui est libre en rotation par rapport à celui-ci, tant dans un sens circonférentiel que dans le sens circonférentiel opposé, caractérisé en ce que, entre les périphéries interne et externe du voile de moyeu (26) et du contre-voile de moyeu (26'), il y a au moins une zone (ZP) dudit voile de moyeu (26) et dudit contre-voile de moyeu (26'), dite ci-après par simple commodité zone d'interpénétration, où ce voile de moyeu (26) et ce contre-voile de moyeu (26') s'interpénètrent axialement l'un par rapport à l'autre.

2. Dispositif amortisseur de torsion suivant la revendication 1, caractérisé en ce que les zones d'action (Z, Z') suivant lesquelles interviennent les moyens d'engrènement à jeu (27) entre le moyeu (25) et le voile de moyeu (26) et ceux (27') entre le moyeu (25) et le contre-voile de moyeu (26') appartiennent à une zone d'interpénétration (ZP1), lesdites zones d'action (Z, Z') étant au moins en partie circonférentiellement sensiblement dans l'alignement l'une de l'autre.

3. Dispositif amortisseur de torsion suivant la revendication 2, caractérisé en ce que, le moyeu (25) comportant lui-même, transversalement, pour la constitution des moyens d'engrènement à jeu (27, 27'), un flasque (28), dit ici par simple commodité voile intermédiaire, les zones d'action (Z, Z') desdits moyens d'engrènement à jeu (27, 27') sont l'une et l'autre confinées dans l'épaisseur même dudit voile intermédiaire (28).

4. Dispositif amortisseur de torsion suivant la revendication 3, caractérisé en ce que, les moyens d'engrènement à jeu (27, 27') comportant, tant pour le voile de moyeu (26) et le contre-voile de moyeu (26') que pour le voile intermédiaire (28), des dents (33, 36, 36'), et la partie courante (35, 35') dudit voile de moyeu (26) et dudit contre-voile de moyeu (26') étant définie comme étant la partie de ces flasques par laquelle ceux-ci sont globalement parallèles l'un à l'autre, les dents (36, 36') de l'un au moins desdits flasques sont au moins partiellement déportées axialement en direction de l'autre par rapport à sa partie courante (35, 35').

5. Dispositif amortisseur de torsion suivant la revendication 4, caractérisé en ce que les dents (36, 36') du voile de moyeu (26) et du contre-voile de moyeu (26') sont au moins partiellement déportées axialement l'une en direction de l'autre par rapport à leur partie courante (35, 35').

6. Dispositif amortisseur de torsion suivant l'une quelconque des revendications 4, 5, caractérisé en ce que les dents (33) du voile intermédiaire (28) sont elles aussi au moins partiellement déportées axialement.

7. Dispositif amortisseur de torsion suivant l'une quelconque des revendications 4 à 6, caractérisé en ce que les dents (36) du voile de moyeu (26) alternent circonférentiellement avec celles (36') du contre-voile de moyeu (26').

8. Dispositif amortisseur de torsion suivant l'une quelconque des revendications 1 à 6, caractérisé en ce que, radialement à distance de leurs périphéries internes, le voile de moyeu (26) et le contre-voile de moyeu (26') comportent une zone d'interpénétration (ZP2), ou zone d'interpénétration intermédiaire.

9. Dispositif amortisseur de torsion suivant la revendication 8, caractérisé en ce que, le long de ladite zone d'interpénétration intermédiaire (ZP2), l'un au moins des flasques que constituent le voile de moyeu (26) et le contre-voile de moyeu (26') comporte au moins un évidement (75, 75'), une fenêtre par exemple, et l'autre comporte une portion (76, 76'), dite ci-après par simple commodité portion d'engagement, engagée axialement dans ledit évidement (75, 75').

10. Dispositif amortisseur de torsion suivant la revendication 9, caractérisé en ce que ladite portion d'engagement (76, 76') comporte radialement, au moins un coude de pliage (P).

11. Dispositif amortisseur de torsion suivant l'une quelconque des revendications 9, 10, caractérisé en ce que les bords dudit évidement (75, 75') comportent radialement au moins un coude de pliage (P).

12. Dispositif amortisseur de torsion suivant l'une quelconque des revendications 9 à 11, caractérisé en ce que l'un au moins des flasques que constituent le voile de moyeu (26) et le contre-voile de moyeu (26') comporte circonférentiellement une alternance de portions d'engagement (76, 76') et d'évidements (75, 75').

13. Dispositif amortisseur de torsion suivant la revendication 12, caractérisé en ce que chacun des flasques que constituent le voile de moyeu (26) et le contre-voile de moyeu (26') comporte circonférentiellement une alternance de portions d'engagement (76, 76') et d'évidements (75, 75'), et la disposition en est la même pour l'un et l'autre desdits flasques.

14. Dispositif amortisseur de torsion suivant l'une quelconque des revendications 9 à 13, caractérisé en ce que les évidements (75, 75') et portions d'engagement (76, 76') prévus sur les flasques que constituent le voile de moyeu (26) et le contre-voile de moyeu (26') forment pour lesdits flasques des moyens d'engrènement à jeu (78).

15. Dispositif amortisseur de torsion suivant l'une quelconque des revendications 1 à 14, caractérisé en ce que, le moyeu (25) comportant lui-même, transversalement, pour la constitution des moyens d'engrènement à jeu (27, 27'), un flasque (28) dit ici par simple commodité voile intermédiaire, ledit voile intermédiaire (28) comporte, circulairement au moins une barrette circulairement continue (80) contre laquelle sont axialement en appui les flasques que constituent le voile de moyeu (26) et le contre-voile de moyeu (26'), lesdits flasques comportant eux-mêmes chacun, au droit de la barrette circulairement continue (80) du voile intermédiaire (28), une barrette circulairement continue (81, 81').

16. Dispositif amortisseur de torsion suivant la revendication 15, caractérisé en ce que la barrette circulairement continue (80) du voile intermédiaire (28) forme la périphérie de plus grand diamètre de celui-ci.

17. Dispositif amortisseur de torsion suivant l'une quelconque des revendications 15, 16, caractérisé en ce que, pour les moyens d'engrènement à jeu (27) avec le voile de moyeu (26) et (27') avec le contre-voile de moyeu (26'), le voile intermédiaire (28) comporte des évidements (82).

18. Dispositif amortisseur de torsion suivant la revendication 17, caractérisé en ce que, pour l'engagement des dents (36, 36') du voile de moyeu (26) et du contre-voile de moyeu (26'), les bords des évidements (82) du voile intermédiaire (28) comportent radialement au moins un coude de pliage (P).

19. Dispositif amortisseur de torsion suivant l'une quelconque des revendications 15 à 18, caractérisé en ce que le voile intermédiaire (28), et les flasques que constituent le voile de moyeu (26) et le contre-voile de moyeu (26'), appartiennent à un sous-ensemble unitaire, une portion au moins desdits flasques se trouvant axialement disposée entre ledit voile intermédiaire (28) et une plaquette annulaire (84) rapportée sur celui-ci.

20. Dispositif amortisseur de torsion suivant l'une quelconque des revendications 1 à 18, caractérisé en ce que, le moyeu (25) comportant lui-même transversalement, pour la constitution des moyens d'engrènement à jeu (27, 27') un flasque (28), dit ici par simple commodité voile intermédiaire, ledit voile intermédiaire (28) comporte, à sa périphérie de plus grand diamètre, des dents ($90_1$, $90_2$) qui sont alternativement décalées axialement les unes par rapport aux autres dans un sens axial pour les dents ($90_1$) et dans le sens axial opposé pour les dents ($90_2$), et par lesquelles, suivant un montage du type à baïonnette, il encadre la périphérie de plus petit diamètre de celle (45) des rondelles de guidage dont il est axialement séparé par les flasques que constituent le voile de moyeu (26) et le contre-voile de moyeu (26'), ladite périphérie de ladite rondelle de guidage (45) présentant elle-même à cet effet des dents (91).

21. Dispositif amortisseur de torsion suivant l'une quelconque des revendications 1 à 20, caractérisé en ce que, les moyens élastiques à action circonférentielle comportant deux étages d'organes élastiques (60A, 60B) de raideurs différentes, avec, pour action sur ceux-ci, des bras (67A, 67B, 67'A, 67'B) prévus à cet effet à la périphérie externe du voile de moyeu (26) et du contre-voile de moyeu (26'), certains au moins des organes élastiques (60A) d'un premier desdits étages sont associés par paires, avec, pour la configuration de repos de l'ensemble, une superposition axiale des bras (67A, 67'A) correspondants dudit voile de moyeu (26) et dudit contre-voile de moyeu (26') entre les deux organes élastiques (60A) d'une telle paire, tandis que, pour ladite configuration de repos, certains au moins des organes élastiques (60B) d'un deuxième desdits étages sont chacun individuellement encadrés par deux bras (67B, 67'B) appartenant l'un au voile de moyeu (26), l'autre au contre-voile de moyeu (26').

22. Dispositif amortisseur de torsion suivant l'une quelconque des revendications 1 à 21, caractérisé en ce que, les moyens élastiques à action circonférentielle comportant, comme organes élastiques (60A, 60B), des ressorts du type ressort à boudin, il est associé auxdits ressorts des moyens de rétention propres à les retenir radialement à l'encontre de la force centrifuge.

23. Dispositif amortisseur de torsion suivant les revendications 21, 22, prises conjointement, caractérisé en ce que lesdits moyens de rétention comportent dfes doigts (70, 70'), qui font saillie circonférentiellement sur les bras (67A, 67B, 67'A, 67'B) du voile de moyeu (26) et du contre-voile de moyeu (26'), et sur lesquels sont circonférentiellement engagés lesdits ressorts.

24. Dispositif amortisseur de torsion suivant la revendication 23, caractérisé en ce que lesdits doigts (70, 70') sont effilés en direction de leur extrémité libre.

25. Dispositif amortisseur de torsion suivant les revendications 21, 22, prises conjointement, caractérisé en ce que lesdits moyens de rétention comportent un jonc (71), sur lequel sont engagés lesdits ressorts, et qui est lui-même calé radialement sur certains au moins des bras (67A, 67B, 67'A, 67'B) du voile de moyeu (26) et du contre-voile de moyeu (26').

26. Dispositif amortisseur de torsion suivant la revendication 25, caractérisé en ce que, pour le calage radial dudit jonc (71), les bras concernés du voile de moyeu (26) et du contre-voile de moyeu (26') comportent un coude (72, 72').

27. Dispositif amortisseur de torsion suivant l'une quelconque des revendications 1 à 26, caractérisé en ce que, la deuxième partie (B) comportant deux rondelles de guidage (45, 45'), qui encadrent le voile de moyeu (26) et le contre-voile de moyeu (26'), et qui sont solidaires en rotation l'une de l'autre, avec, prenant appui sur l'une d'elles, des moyens élastiques à action axiale (68) propres à solliciter en direction l'un de l'autre ledit voile de moyeu (26) et ledit contre-voile de moyeu (26'), l'une au moins desdites rondelles de guidage (45, 45') comporte annulairement, pour son raidissement, sensiblement au droit desdits moyens élastiques à action axiale (68), un repli (55) qui s'écarte de l'autre.

28. Dispositif amortisseur de torsion suivant la revendication 27, caractérisé en ce que l'une au moins des rondelles de guidage (45, 45') comporte un prolongement axial (49, 49') à sa périphérie externe.

29. Dispositif amortisseur de torsion suivant l'une quelconque des revendications 1 à 28, caractérisé en ce que, au niveau d'une zone d'interpénétration (ZP) des flasques que constituent le voile de moyeu (26) et le contre-voile de moyeu (26'), il y a, lors du débattement angulaire, un entraînement circonférentiel d'un desdits flasques par l'autre, le contre-voile de moyeu (26') par le voile de moyeu (26) pour un premier sens circonférentiel, et le voile de moyeu (26) par le contre-voile de moyeu (26') pour le sens circonférentiel opposé.

30. Organe d'accouplement hydraulique, caractérisé en ce qu'il est équipé d'un dispositif amortisseur de torsion (15) conforme à l'une quelconque des revendications 1 à 29.

31. Organe d'accouplement hydraulique suivant la revendication 30, caractérisé en ce que les moyens d'engrènement à jeu (27, 27') s'étendent radialement légèrement au-delà du renflement (20) de sa roue de turbine (13) par rapport à l'axe de l'ensemble, au voisinage dudit renflement (20), seul le voile intermédiaire (28) du moyeu (25) s'étendant au droit de ce dernier.

32. Organe d'accouplement hydraulique suivant la revendication 30, caractérisé en ce que les moyens d'engrènement à jeu (27, 27') s'étendent entre le renflement (20) de sa roue de turbine (13) et l'axe de l'ensemble.

33. Organe d'accouplement hydraulique suivant l'une quelconque des revendications 30, 32, caractérisé en ce qu'il y a une zone d'interpénétration (ZP2) au droit du renflement (20) de sa roue de turbine (13).

## Claims

1. Torsional damper device, particularly for automotive vehicles, of the kind comprising at least two coaxial parts (A, B) disposed to rotate relative to one another within defined limits of angular displacement against elastic means, called circumferentially acting elastic means, adapted to act circumferentially between them for at least part of such relative angular displacement, namely a first part (A) comprising, on the one hand, a hub (25) and, on the other hand, two flanges (26, 26'), hereafter called for convenience the hub flange and hub counter-flange, each of which forms an annular part around the said hub (25), and each of which meshes with the said hub (25) through meshing means with clearance (27, 27'), with, for the rest configuration of the assembly, an alternating arrangement whereby the meshing means with clearance (27) between the hub (25) and the hub flange (26) are in circumferentially abutting relationship for one circumferential direction and, conjointly, the meshing means with clearance (27) between the said hub (25) and the hub counter-flange (26') are in circumferentially abutting relationship for the opposite circumferential direction, and a second part (B) itself comprising at least one flange (45, 45'), usually called the guide ring, which also forms an annular part around the hub, but which is free to rotate relative thereto in either circumferential direction, characterized in that between the inside and outside peripheries of the hub flange (26) and the hub counter-flange (26'), there is at least one area (ZP) of the said hub flange (26) and the said hub counter-flange (26'), hereafter referred to for convenience as the interpenetration area, where the hub (26) and the hub counter-flange (26') interpenetrate axially relative to each other.

2. Torsional damper device according to claim 1, characterized by the action areas (Z, Z') in which the meshing means with clearance (27) operative between the hub flange (26) and those (27') between the hub (25) and the hub counter-flange (26') form part of an interpenetration area (ZP1), the said action areas (Z, Z') being at least in part in substantial circumferential alignment with each other.

3. Torsional damper device according to claim 2, characterized in that the hub (25) itself comprising a transverse flange (28), hereafter referred to for convenience as the intermediate flange, forming part of the meshing means with clearance (27, 27'), the action areas (Z, Z') of the said meshing means with clearance (27, 27') are both confined within the thickness of the said intermediate flange.

4. Torsional damper device according to claim 3, characterized in that the meshing means with clearance (27, 27') comprising, as much for the hub flange (26) and the hub counter-flange (26') as for the intermediate flange (28), teeth (33, 36, 36'), and the main part (35, 35') of the said hub flange (26) and the said hub counter-flange (26') being defined as being part of these flanges whereby the latter are generally parallel to one another, the teeth (36, 36') of at least one of the said flanges are at least partially offset axially towards the other relative to its main part (35, 35').

5. Torsional damper device according to claim 4, characterized in that the teeth (36, 36') of the hub flange (26) and of the hub counter-flange (26') are at least partially offset one towards the other relative to its main part (35, 35').

6. Torsional damper device according to any one of claims 4 or 5, characterized in that the teeth (33) of the intermediate flange (28) are also at least partially offset axially.

7. Torsional damper device according to any one of claims 4 to 6, characterized in that the teeth (36) of the hub flange (26) alternate circumferentially with those of the hub counter-flange (26').

8. Torsional damper device according to any one of claims 1 to 6, characterized in that radially spaced from their inside periphery, the hub flange (26) and the hub counter-flange (26') comprise an interpenetration area (ZP2) or an intermediate interpenetration area.

9. Torsional damper device according to claim 8, characterized in that along the length of the said interpenetration area (ZP2), one at least of the flanges which the hub flange (26) and the hub counter-flange (26') constitute, comprises at least one opening (75, 75'), a window for example, and the other comprises a portion (76, 76'), hereafter referred to for convenience as the engagement portion, engaged axially in the said opening (75, 75').

10. Torsional damper device according to claim 9, characterized in that the said engagement portion (76, 76') comprises radially at least one bend (P).

11. Torsional damper device according to any one of claims 9 or 10, characterized in that the edges of the said opening (75, 75') comprise radially at least one bend (P).

12. Torsional damper device according to any one of claims 9 to 11, characterized in that at least one of the flanges which the hub flange (26) and the hub counter-flange (26') constitute, comprises circumferentially alternating engagement portions (76, 76') and openings (75, 75').

13. Torsional damper device according to claim 12, characterized in that each of the flanges which the hub flange (26) and the hub counter-flange (26') constitute, comprises circumferentially alternating engagement portions (76, 76') and openings (75, 75'), and the arrangement is the same for both of the said flanges.

14. Torsional damper device according to any one of claims 9 to 13, characterized in that the openings (75, 75') and engagement portions (76, 76') provided on the flanges which the hub flange (26) and the hub counter-flange (26') constitute, form meshing means with clearance (78) for the said flanges.

15. Torsional damper device according to any one of claims 1 to 14, characterized in that the hub (25) itself comprising a transverse flange (28), hereafter referred to for convenience as the intermediate flange, forming part of the meshing means with clearance (27, 27'), the said intermediate flange (28) comprises, circumferentially, at least one circumferentially continuous bar (80) against which are in axial bearing engagement the flanges which the hub flange (26) and the hub counter-flange (26') constitute, the said flanges themselves each comprising, in line with the circumferentially continuous bar (80) of the intermediate flange (28), a circumferentially continuous bar (81, 81').

16. Torsional damper device according to claim 15, characterized in that the circumferentially continuous bar (80) of the intermediate flange (28) forms its periphery with largest diameter.

17. Torsional damper device according to any one of claims 15 or 16, characterized in that the intermediate flange (28) comprises openings (82) for the meshing means with clearance (27) with the hub flange (26) and the meshing means with clearance (27') with the hub counter-flange (26').

18. Torsional damper device according to claim 17, characterized in that the edges of the openings (82) in the intermediate flange (28) comprise, radially, at least one bend (P) for engagement of the teeth (36, 36') of the hub flange (26) and the hub counter-flange (26').

19. Torsional damper device according to any one of claims 15 to 18, characterized in that the intermediate flange (28) and the flanges which the hub flange (26) and the hub counter-flange (26') constitute, form part of a unitary sub-assembly, a portion at least of the said flanges being axially disposed between the said intermediate flange (28) and an annular plate (84) attached thereto.

20. Torsional damper device according to any one of claims 1 to 18, characterized in that the hub (25) itself comprising a transverse flange (28), hereafter referred to for convenience as the intermediate flange, forming part of the meshing means with clearance (27, 27'), the said intermediate flange (28) comprises, at its largest diameter, teeth ($90_1$,

$90_2$) which are alternately offset relative to each other, some ($90_1$) in one axial direction and the others ($90_2$) in the opposite axial direction, and by means of which, by virtue of a bayonette type coupling, it surrounds the smallest diameter periphery of that (45) guide ring from which it is axially separated by the flanges which the hub flange (26) and the hub counter-flange (26') constitute, the said periphery of the said guide ring (45) itself having teeth (91) for this purpose.

21. Torsional damper device according to any one of claims 1 to 20, characterized in that the circumferentially acting elastic means comprising two stages of elastic members (60A, 60B) of different stiffness, with, to act on these, arms (67A, 67B, 67'A, 67'B) provided for this purpose on the outside periphery of the hub flange (26) and the hub counter-flange (26'), certain at least of the elastic members (60A) of a first of the said stages are associated in pairs, wuth, for the rest configuration of the assembly, axial superposition of the corresponding arms (67A, 67'A) of the said hub flange (26) and the said hub counter-flange (26') between the two elastic members (60A) of a pair of this kind, whereas, for the said rest configuration, certain at least of the elastic members (60B) of a second of the said stages are each individually bracketed by two arms (67B, 67'B) one of which forms part of the hub flange (26) and the other of the hub counter-flange (26').

22. Torsional damper device according to any one of claims 1 to 21, characterized in that the circumferentially acting elastic means comprising, as elastic members (60A, 60B), helical coil type springs, there are associated with the said springs means to retain them radially against centrifugal force.

23. Torsional damper device according to claims 21 and 22, taken together, characterized in that the said retaining means comprise fingers (70, 70') which project circumferentially from the arms (67A, 67B, 67'A, 67'B) of the hub flange (26) and the hub counter-flange (26') and over which are circumferentially engaged the said springs.

24. Torsional damper device according to claim 23, characterized in that the said fingers (70, 70') are tapered towards their free end.

25. Torsional damper device according to claims 21 and 22, taken together, characterized in that the said retaining means comprise a ring (71) over which the said springs are engaged, and which itself is keyed radially to certain at least of the arms (67A, 67B, 67'A, 67'B) of the hub flange (26) and the hub counter-flange (26').

26. Torsional damper device according to claim 25, characterized in that for the radial keying of the said ring (71), the arms concerned of the hub flange (26) and the hub counter-flange (26') comprise a bend (72, 72').

27. Torsional damper device according to any one of claims 1 to 26, characterized in that the second part (B) comprising two guide rings (45, 45') which lie one on either side of the hub flange (26) and the hub counter-flange (26') and which are constrained to rotate with one another, with axially acting elastic means (68) bearing on one of them and adapted to urge the said hub flange (26) and the said hub counter-flange (26') towards each other, one at least of the said guide rings (45, 45') comprises an annular fold (55) directed away from the other for stiffening it, substantially in line with the said axially acting elastic means (68).

28. Torsional damper device according to claim 27, characterized in that one at least of the guide rings (45, 45') comprises an axial extension (49, 49') at its outside periphery.

29. Torsional damper device according to any one of claims 1 to 28, characterized in that at the level of an interpenetration area (ZP) of the flanges which the hub flange (26) and the hub counter-flange (26') constitute, one of the said flanges drives the other circumferentially on relative angular displacement, the hub counter-flange (26') being driven by the hub flange (26) for a first circumferential direction and the hub flange (26) by the hub counter-flange (26') for the opposite circumferential direction.

30. Hydraulic coupling device, characterized in that it is equipped with a torsional damper device (15) conforming to any one of claims 1 to 29.

31. Hydraulic coupling device according to claim 30, characterized in that the meshing means with clearance (27, 27') extend slightly beyond the swelling (20) of its turbine wheel (13) relative to the axis of the assembly, in the vicinity of the said swelling (20), only the intermediate flange (28) of the hub (25) extending in line with the latter.

32. Hydraulic coupling device according to claim 30, characterized in that the meshing means with clearance (27, 27') extend between the swelling (20) of its turbine wheel (13) and the axis of the assembly.

33. Hydraulic coupling device according to any one of claims 30, 32, characterized in that there is an interpenetration area (ZP2) in line with the swelling (20) of its turbine wheel (13).

**Patentansprüche**

1. Torsionsdämpfer, insbesondere für Kraftfahrzeuge, von der Art mit wenigstens zwei koaxialen Teilen (A, B), die in bezug aufeinander innerhalb der Grenzen eines bestimmten Winkelausschlags und entgegen elastischen Mitteln, elastische Mittel mit Umfangswirkung genannt, drehbar angebracht sind, welche zwischen ihnen über einen Bereich von wenigstens einem solchen Winkelausschlag umfangsmässig wirken können, d.h. mit einem ersten Teil (A), welcher einerseits eine Nabe (25) und andererseits zwei Flansche (26, 26'), der Einfachheit halber Nabenscheibe und Nabengegenscheibe genannt, aufweist, die jeweils ein ringförmiges Teil um die genannte Nabe (25) bilden und von denen jede an der genannten Nabe (25) über ein Spiel aufweisende Eingriffsmittel (27, 27') eingreift, mit einer für die Ruhekonfiguration der Gesamtheit abwechselnden Anordnung, der zufolge sich die ein Spiel aufweisendes Eingriffsmittel (27) zwischen der Nabe (25) und der Nabenscheibe (26) in Umfangsanschlag bei einem Umfangssinn befinden und sich ebenfalls die ein Spiel aufweisendes Eingriffsmittels (27') zwischen der genannten Nabe (25) und der Nabengegenscheibe (26') in Umfangsanschlag bei dem zu dem vorgenannten entgegengesetzten Umfangssinn befinden, und mit einem zweiten Teil (B), welcher selbst wenigstens einen Flansch (45, 45') aufweist, allgemein Führungsscheibe genannt, welche ebenfalls einen ringförmigen Teil um die Nabe bildet, jedoch in bezug auf diese frei drehbar in dem einem Umfangssinn wie in dem entgegengesetzten Umfangssinn ist, dadurch gekennzeichnet, dass sich zwischen dem inneren und dem äusseren Umfang der Nabenscheibe (26) und der Nabengegenscheibe (26') bei einer genannten Nabenscheibe (26) und der genannten Nabengegenscheibe (26'), wenigstens ein Bereich (ZP), im folgenden einfachheitshalber gegenseitiger Durchdringungsbereich genannt, befindet, wo sich diese genannte Nabenscheibe (26) und diese genannte Nabengegenscheibe (26') in bezug aufeinander gegenseitig durchdringen.

2. Torsionsdämpfer nach Anspruch 1, dadurch gekennzeichnet, dass die Wirkungsbereiche (Z, Z'), bei denen die ein Spiel aufweisenden Eingriffsmittel (27) zwischen der Nabe (25) und der Nabenscheibe (26) und diejenigen (27') zwischen der Nabe (25) und der Nabengegenscheibe (26') eingreifen, zu einem gegenseitigen Durchdringungsbereich (ZP1) gehören, wobei sich die genannten Wirkungsbereiche (Z, Z') über einen Umfangsabschnitt im wesentlichen in gegenseitiger Ausrichtung befinden.

3. Torsionsdämpfer nach Anspruch 2, dadurch gekennzeichnet, dass die Nabe (25) selbst zur Bildung der ein Spiel aufweisenden Eingriffsmittel (27, 27') quer einen Flansch (28), hier der Einfachheit halber Zwischenscheibe genannt, aufweist, wobei die Wirkungsbereiche (Z, Z') der genannten ein Spiel aufweisenden Eingriffsmittel (27, 27') beide in der Dicke selbst der genannten Zwischenscheibe (28) begrenzt sind.

4. Torsionsdämpfer nach Anspruch 3, dadurch gekennzeichnet, dass die ein Spiel aufweisenden Eingriffsmittel (27, 27') sowohl für die Nabenscheibe (26) und die Nabengegenscheibe (26') als auch die Zwischenscheibe (28) Zähne (33, 36, 36') umfassen und der reguläre Abschnitt (35, 35') der genannten Nabenscheibe (26) und der genannten Nabengegenscheibe (26') als der Abschnitt dieser Flansche definiert ist, über den sie allgemein zueinander parallel sind, wobei die Zähne (36, 36') von wenigstens einem der genannten Flansche wenigstens teilweise axial in Richtung zu dem anderen in bezug auf seinen regulären Abschnitt (35, 35') verschoben sind.

5. Torsionsdämpfer nach Anspruch 4, dadurch gekennzeichnet, dass die Zähne (36, 36') der Nabenscheibe (26) und der Nabengegenscheibe (26') wenigstens teilweise axial in bezug auf ihren regulären Abschnitt (35, 35') in Richtung zueinander verschoben sind.

6. Torsionsdämpfer nach irgendeinem der Ansprüche 4 oder 5, dadurch gekennzeichnet, dass auch die Zähne (33) der Zwischenscheibe (28) wenigstens teilweise axial verschoben sind.

7. Torsionsdämpfer nach irgendeinem der Ansprüche 4 bis 6, dadurch gekennzeichnet, dass die Zähne (36) der Nabenscheibe (26) umfangsmässig mit denjenigen (36') der Nabengegenscheibe (26') abwechseln.

8. Torsionsdämpfer nach irgendeinem der Ansprüche 1 bis 6, dadurch gekennzeichnet, dass die Nabenscheibe (26) und die Nabengegenscheibe (26') radial von ihren inneren Umfängen beabstandet einen gegenseitigen Durchdringungsbereich (ZP2) oder einen gegenseitigen Durchdringungszwischenbereich aufweisen.

9. Torsionsdämpfer nach Anspruch 8, dadurch gekennzeichnet, dass längs des genannten gegenseitigen Durchdringungszwischenbereichs (ZP2) wenigstens einer der Flansche, die die Nabenscheibe (26) und die Nabengegenscheibe (26') bilden, wenigstens eine Ausnehmung (75, 75'), beispielsweise ein Fenster, und der andere einen Abschnitt (76, 76'), im folgenden der Einfachheit halber Eingriffsabschnitt genannt, aufweist, der axial in die genannte Ausnehmung (75, 75') eingreift.

10. Torsionsdämpfer nach Anspruch 9, dadurch gekennzeichnet, dass der genannte Eingriffsabschnitt (76, 76') radial wenigstens eine Biegungskröpfung (P) aufweist.

11. Torsionsdämpfer nach irgendeinem der Ansprüche 9 oder 10, dadurch gekennzeichnet, dass die Ränder der genannten Ausnehmung (75, 75') radial wenigstens eine Biegungskröpfung (P) aufweisen.

12. Torsionsdämpfer nach irgendeinem der Ansprüche 9 bis 11, dadurch gekennzeichnet, dass wenigstens einer der Flansche, die die Nabenscheibe (26) und die Nabengegenscheibe (26') bilden, umfangsmässig eine Wechselfolge von Eingriffsabschnitten (76, 76') und Ausnehmungen (75, 75') aufweist.

13. Torsionsdämpfer nach Anspruch 12, dadurch gekennzeichnet, dass jeder der Flansche, die die Nabenscheibe (26) und die Nabengegenscheibe (26') bilden, umfangsmässig eine Wechselfolge von Eingriffsabschnitten (76, 76') und Ausnehmungen (75, 75') aufweist, und dass die Anordnung für beide genannten Flansche die gleiche ist.

14. Torsionsdämpfer nach irgendeinem der Ansprüche 9 bis 13, dadurch gekennzeichnet, dass die Ausnehmungen (75, 75') und die Eingriffsabschnitte (76, 76'), die an den Flanschen vorgesehen sind, welche die Nabenscheibe (26) und die Nabengegenscheibe (26') bilden, für die genannten Flansche die ein Spiel aufweisenden Eingriffsmittel (78) bilden.

15. Torsionsdämpfer nach irgendeinem der Ansprüche 1 bis 14, dadurch gekennzeichnet, dass die Nabe (25) selbst zur Bildung der ein Spiel aufweisendes Eingriffsmittel (27, 27') quer einen Flansch (28), hier einfachheitshalber Zwischenscheibe genannt, aufweist, wobei die genannte Zwischenscheibe (28) kreismässig wenigstens einen kreismässig fortlaufenden Steg (80) aufweist, gegen den sich die Flansche, welche die Nabenscheibe (26) und die Nabengegenscheibe (26') bilden, axial in Andruck befinden, wobei die genannten Flansche jeweils selbst an der Stelle des kreismässig fortlaufenden Stegs (80) der Zwischenscheibe (28) einen kreismässig fortlaufenden Steg (81, 81') aufweisen.

16. Torsionsdämpfer nach Anspruch 15, dadurch gekennzeichnet, dass der kreismässig fortlaufende Steg (80) der Zwischenscheibe (28) deren Umfang mit dem grösseren Durchmesser bildet.

17. Torsionsdämpfer nach irgendeinem der Ansprüche 15 oder 16, dadurch gekennzeichnet, dass die Zwischenscheibe (28) für die ein Spiel aufweisenden Eingriffsmittel (27) mit der Nabenscheibe (26) und (27') mit der Nabengegenscheibe (26') Ausnehmungen (82) aufweist.

18. Dämpfungsvorrichtung nach Anspruch 17, dadurch gekennzeichnet, dass die Ränder der Ausnehmungen (82) der Zwischescheibe (28) für den Eingriff der Zähne (36, 36') der Nabenscheibe (26) und der Nabengegenscheibe (26') radial wenigstens eine Biegungskröpfung (P) aufweist.

19. Dämpfungsvorrichtung nach irgendeinem der Ansprüche 15 bis 18, dadurch gekennzeichnet, dass die Zwischenscheibe (28) und die Flansche, welche die Nabenscheibe (26) und die Nabengegenscheibe (26') bilden, zu einer einheitlichen Untergesamtheit gehören, wobei sich wenigstens ein Abschnitt der genannten Flansche axial angeordnet zwischen der genannten Zwischenscheibe (28) und einer an dieser angebrachten ringförmigen Platte (84) befindet.

20. Torsionsdämpfer nach irgendeinem der Ansprüche 1 bis 18, dadurch gekennzeichnet, dass die Nabe (25) selbst zur Bildung der ein Spiel aufweisenden Mittel (27, 27') quer einen Flansch (28), hier der Einfachheit halber Zwischenscheibe genannt, aufweist, wobei die genannten Zwischenscheibe (28) auf ihrem Umfang mit dem grösseren Durchmesser Zähne ($90_1$, $90_2$) aufweist, die abwechselnd axial in bezug aufeinander in einer axialen Richtung für die Zähne ($90_1$) und in der entgegengesetzten, axialen Richtung für die Zähne ($90_2$) versetzt sind und mittels welcher sie entsprechend einem Bajonettzusammenbau den Umfang mit dem kleineren Durchmesser derjenigen (45) der Führungsscheiben einrahmt, von der sie axial durch die Flansche getrennt ist, die die Nabenscheibe (26) und die Nabengegenscheibe (26') bilden, wobei der Umfang der genannten Führungsscheibe (45) selbst hierfür Zähne (91) aufweist.

21. Torsionsdämpfer nach irgendeinem der Ansprüche 1 bis 20, dadurch gekennzeichnet, dass die elastischen Mittel mit Umfangswirkung zwei Stufen von elastischen Organen (60A, 60B) mit unterschiedlicher Steifigkeit aufweisen, wobei zur Wirkung auf diese hierfür am Aussenumfang der Nabenscheibe (26) und der Nabengegenscheibe (26') Arme (67A, 67B, 67'A, 67'B) vorgesehen sind, wenigstens gewisse der elastischen Organe (60A) einer ersten der genannten Stufen paarweise zugeordnet sind, wobei in der Ruhekonfiguration der Gesamtheit eine axiale Überlagerung der der genannten Nabenscheibe (28) und der genannten Nabengegenscheibe (26') entsprechenden Arme (67A, 67'A) zwischen den zwei elastischen Organen (60A) eines solchen Paares vorliegt, während bei der genannten Ruhekonfiguration wenigstens gewisse der elastischen Organe (60B) einer zweiten der genannten Stufen jeweils einzeln von zwei Armen (67B, 67'B) eingerahmt sind, von denen einer zu der Nabenscheibe (26) und der andere zu der Nabengegenscheibe (26') gehört.

22. Torsionsdämpfer nach irgendeinem der Ansprüche 1 bis 21, dadurch gekennzeichnet, dass die elastischen Mittel mit Umfangswirkung als elastische Organe (60A, 60B) Federn vom Sprungfedertyp umfassen, wobei den genannten Federn Rückhaltemittel zugeordnet sind, die zum radialen Zurückhalten entgegen der Zentrifugalkraft geeignet sind.

23. Torsionsdämpfer nach den Ansprüchen 21 und 22, dadurch gekennzeichnet, dass die genannten Zurückhaltemittel Finger (70, 70') umfassen, die umfangsmässig von den Armen (67A, 67B, 67'A, 67'B) der Nabenscheibe (26) und der Nabengegenscheibe (26') vorstehen und an denen die genannten Federn umfangsmässig eingreifen.

24. Torsionsdämpfer nach Anspruch 23, dadurch gekennzeichnet, dass die genannten Finger (70, 70') in Richtung zu ihrem freien Ende verjüngt sind.

25. Torsionsdämpfer nach den Ansprüchen 21 und 22, dadurch gekennzeichnet, dass die genannten Zurückhaltemittel einen Sprengring (71) umfassen, an dem die genannten Federn eingreifen und der selbst radial wenigstens an gewissen der Arme (67A, 67B, 67'A, 67'B) der Nabenscheibe (26) und der Nabengegenscheibe (26') festgesetzt ist.

26. Torsionsdämpfer nach Anspruch 25, dadurch gekennzeichnet, dass die betreffenden Arme der Nabenscheibe (26) und der Nabengegenscheibe (26') zum radialen Festsetzen des genannten Sprengringes (71) eine Biegung (72, 72') aufweisen.

27. Torsionsdämpfer nach irgendeinem der Ansprüche 1 bis 26, dadurch gekennzeichnet, dass der zweite Teil (B) zwei Führungsscheiben (45, 45') umfasst, die die Nabenscheibe (26) und die Nabengegenscheibe (26') einrahmen und die relativ zueinander drehfest sind, wobei sich auf einen von ihnen elastische Mittel (68) mit Axialwirkung abstützen, die geeignet sind, die genannte Nabenscheibe (26) und die genannte Nabengegenscheibe (26') in Richtung aufeinander zu belasten, wobei wenigstens eine der genannten Führungsscheiben (45, 45') ringmässig zu ihrer Versteifung im wesentlichen an der Stelle der genannten elastischen Mittel (68) mit Axialwirkung einen Falz (55) aufweist, der von der anderen fortweist.

28. Torsionsdämpfer nach Anspruch 27, dadurch gekennzeichnet, dass wenigstens eine der Führungsscheiben (45, 45') an ihrem Aussenumfang eine axiale Verlängerung (49, 49') aufweist.

29. Torsionsdämpfer nach irgendeinem der Ansprüche 1 bis 28, dadurch gekennzeichnet, dass auf der Höhe eines gegenseitigen Durchdringungsbereiches (ZP) der Flansche, die die Nabenscheibe (26) und die Nabengegenscheibe (26') bilden, beim Winkelausschlag ein Umfangsantrieb einer der genannten Flansche durch den anderen vorliegt, nämlich die die Nabengegenscheibe (26') durch die Nabenscheibe (26) bei einem ersten Umfangssinn und die Nabenscheibe (26) durch die Nabengegenscheibe (26') bei dem entgegengesetzten Umfangssinn.

30. Hydraulisches Kupplungsorgan, dadurch gekennzeichnet, dass es mit einem Torsionsdämpfer (15) gemäss irgendeinem der Ansprüche 1 bis 29 ausgerüstet ist.

31. Hydraulisches Kupplungsorgan nach Anspruch 30, dadurch gekennzeichnet, dass sich die ein Spiel aufweisenden Eingriffsmittel (27, 27') radial etwas über die Verdickung (20) seines Turbinenrades (13) in bezug auf die Achse der Gesamtheit in der Nähe der genannten Verdickung (20) ausbreiten, wobei sich einzig die Zwischenscheibe (28) der Nabe (25) gerade von dieser letzteren erstrecken.

32. Hydraulisches Kupplungsorgan nach Anspruch 30, dadurch gekennzeichnet, dass sich die ein Spiel aufweisenden Eingriffsmittel (27, 27') zwischen der Verdickung (20) seines Turbinenrades (13) und der Achse der Gesamtheit erstrecken.

33. Hydraulisches Kupplungsorgan nach irgendeinem der Ansprüche 30 oder 32, dadurch gekennzeichnet, dass sich ein gegenseitiger Durchdringungsbereich (ZP2) geradlinig von der Verdickung (20) seines Turbinenrades (13) befindet.

## FIG.1

## FIG.3

# FIG.2

# FIG.2A  FIG.2B

FIG.4  FIG.5  FIG.6

FIG.7

FIG.8  FIG.9  FIG.10

67A

66

XII

70

26

35    36    40

XIV

XII

36

40

XIV

XIII

67B

XIII

70

**FIG. 11**

67A

26    66

35

**FIG.12**

67B

26    35

36

40

**FIG.13**

26    35

**FIG.14**

FIG.15

FIG.16

FIG.17

FIG.18

FIG.19

FIG.20

FIG.21  FIG.22  FIG.23

FIG. 24A

FIG. 24B

FIG. 24C

FIG. 25

FIG.26

FIG.27

FIG.28

FIG.29

FIG.30

FIG.31

FIG. 32

FIG. 33

FIG. 34

FIG. 35  FIG. 37

FIG. 36

FIG.38

FIG.39

FIG.40

FIG.41

FIG.42

FIG.44  FIG.45

FIG.46

FIG.43

# FIG. 47

# FIG. 48